# EUROPEAN PATENT SPECIFICATION

(11) **EP 3 216 282 B1**
(45) Date of publication and mention of the grant of the patent: **02.07.2025**
(21) Application number: 15856275.1
(22) Date of filing: 06.11.2015
(51) Int. Cl.: H04W 56/00, H04J 11/00, H04W 16/14, H04L 27/26, H04L 5/14

(54) **SYSTEMS AND METHODS FOR SYNCHRONIZATION SIGNAL**
SYSTEME UND VERFAHREN FÜR SYNCHRONISATIONSSIGNAL
SYSTÈMES ET PROCÉDÉS POUR SIGNAL DE SYNCHRONISATION

(30) Priority: 07.11.2014 US 201462077106 P; 05.11.2015 US 201514933870
(43) Date of publication of application: 13.09.2017
(73) Proprietor: Sharp Kabushiki Kaisha, Sakai City, Osaka 590-8522 (JP)
(72) Inventor: YIN, Zhanping, Camas, Washington 98607 (US); NOGAMI, Toshizo, Camas, Washington 98607 (US); KOWALSKI, John Michael, Camas, Washington 98607 (US)
(74) Representative: Müller Hoffmann & Partner
(86) International application number: PCT/US2015/059585
(87) International publication number: WO 2016/073927

(56) References cited:
- US-A1- 2011 268 101
- US-A1- 2013 176 934
- US-A1- 2013 208 587
- US-A1- 2013 322 371
- US-A1- 2014 050 206
- US-A1- 2014 086 173
- ERICSSON: "Initial discussion on solutions for identified LAA functionalities", vol. RAN WG1, no. Ljubljana, Slovenia; 20141006 - 20141010, 5 October 2014 (2014-10-05), 3GPP, XP050875531, Retrieved from the Internet <URL:http://www.3gpp.org/ftp/Meetings_3GPP_SYNC/RAN1/Docs/> [retrieved on 20141005]
- HITACHI LTD: "Design targets for LAA using LTE", vol. RAN WG1, no. Ljubljana, Slovenia; 20141006 - 20141010, 5 October 2014 (2014-10-05), 3GPP, XP050875493, Retrieved from the Internet <URL:http://www.3gpp.org/ftp/Meetings_3GPP_SYNC/RAN1/Docs/> [retrieved on 20141005]

## Description

### RELATED APPLICATIONS

This application is related to and claims priority from U.S. Provisional Patent Application No. 62/077,106, entitled "SYSTEMS AND METHODS FOR SYNCHRONIZATION SIGNAL AND DISCOVERY SIGNAL TRANSMISSION" filed on November 7, 2014.

### TECHNICAL FIELD

The present disclosure relates generally to communication systems. More specifically, the present disclosure relates to systems and methods for synchronization signal and discovery signal transmission for licensed-assisted access (LAA) long term evolution (LTE).

### BACKGROUND

Wireless communication devices have become smaller and more powerful in order to meet consumer needs and to improve portability and convenience. Consumers have become dependent upon wireless communication devices and have come to expect reliable service, expanded areas of coverage and increased functionality. A wireless communication system may provide communication for a number of wireless communication devices, each of which may be serviced by a base station. A base station may be a device that communicates with wireless communication devices.

As wireless communication devices have advanced, improvements in communication capacity, speed, flexibility and/or efficiency have been sought. However, improving communication capacity, speed, flexibility and/or efficiency may present certain problems.

For example, wireless communication devices may communicate with one or more devices using a communication structure. However, the communication structure used may only offer limited flexibility and/or efficiency. As illustrated by this discussion, systems and methods that improve communication flexibility and/or efficiency may be beneficial.
US 2014/0050206 Al describes a method and an apparatus for transmitting synchronization signal in carrier aggregation system. Provided is a method and an apparatus for transmitting a synchronization signal in a carrier aggregation system. The method comprises: transmitting via a first serving cell a synchronization signal setting information with regard to a second serving cell; and transmitting the synchronization signal via the second serving cell, wherein the synchronization signal is variably set by means of the synchronization signal setting information.

The contribution "initial discussion on solutions for identified LAA functionalities", R1-144267 discusses potential solutions for LAA DL functionalities.

### BRIEF DESCRIPTION OF THE DRAWINGS

Figure 1 is a block diagram illustrating one implementation of one or more evolved NodeBs (eNBs) and one or more user equipments (UEs) in which systems and methods for synchronization signal and discovery signal transmission may be implemented;
Figure 2 is a flow diagram illustrating one implementation of a method for receiving synchronization signals in a licensed-assisted access (LAA) serving cell;
Figure 3 is a flow diagram illustrating on implementation of a method for transmitting synchronization signals in a LAA serving cell;
Figure 4 illustrates one example of timing of synchronization signals for Frequency-Division Duplexing (FDD);
Figure 5 illustrates one example of timing of synchronization signals for Time-Division Duplexing (TDD);
Figure 6 illustrates an example of a LAA subframe burst transmission;
Figure 7 illustrates an example of LAA coexistence with other unlicensed transmissions;
Figure 8 illustrates a LAA synchronization signal structure that follows FDD;
Figure 9 illustrates a LAA synchronization signal structure that follows TDD with shifted primary synchronization signal (PSS) and secondary synchronization signal (SSS) locations within one subframe;
Figure 10 illustrates an example of PSS/SSS transmissions in a LAA cell;
Figure 11 is a flow diagram illustrating one implementation of a method for receiving discovery reference signals (DRS) in a LAA serving cell;
Figure 12 is a flow diagram illustrating on implementation of a method for transmitting DRS in a LAA serving cell;
Figure 13 illustrates an example of DRS transmission in a LAA serving cell;
Figure 14 illustrates various components that may be utilized in a UE;
Figure 15 illustrates various components that may be utilized in an eNB;
Figure 16 is a block diagram illustrating one configuration of a UE in which systems and methods for performing carrier aggregation may be implemented; and
Figure 17 is a block diagram illustrating one configuration of an eNB in which systems and methods for performing carrier aggregation may be implemented.

### DETAILED DESCRIPTION

The invention is defined by the appended claims. References to embodiments which do not fall under the scope of the claims are to be understood as examples useful for understanding the invention.

### DETAILED DESCRIPTION

A user equipment (UE) is described. The UE includes a processor and memory in electronic communication with the processor. Instructions stored in the memory are executable to receive a configuration of a licensed-assisted access (LAA) for a serving cell from an evolved node B (eNB). The instructions are also executable to receive a primary synchronization signal (PSS) and a secondary synchronization signal (SSS) of the serving cell. The PSS and the SSS are mapped according to a frame structure of frequency-division duplexing (FDD).

The LAA may be applicable to both of downlink transmissions only and both downlink and uplink transmissions.

The synchronization signal structure of the serving cell may be determined by the PSS and SSS structure and relative location of a duplexing method of a licensed primary cell.

Alternatively, the synchronization signal structure of the serving cell may be determined by whether the serving cell supports downlink (DL) and uplink (UL) transmissions. If the serving cell supports only DL transmissions, the synchronization signal structure of the serving cell may be determined by the PSS and SSS structure and relative location of a FDD serving cell. If the serving cell supports both DL and UL transmissions, the synchronization signal structure of the serving cell may be determined by the PSS and SSS structure and relative location of a TDD serving cell.

The synchronization signal structure of the serving cell may be configured by the eNB.

If the synchronization signal structure of the serving cell is determined by the PSS and SSS structure of a TDD serving cell, a relative position of the PSS and the SSS of the TDD serving cell may be maintained. A location of the PSS and the SSS may be shifted so that the PSS and the SSS are in the same subframe.

The UE may receive the PSS and the SSS of the serving cell in a fixed subframe location in a radio frame. The UE may receive the PSS and the SSS of the serving cell in a fixed subframe location in a burst of subframe transmissions. The PSS and the SSS of the serving cell may be in a first subframe in the burst of subframe transmissions. The PSS and the SSS of the serving cell may be in a fixed subframe index within the LAA set or burst of subframe transmissions.

A method by a UE is also described. The method includes receiving a configuration of a LAA for a serving cell from an eNB. The method also includes receiving a PSS and a SSS of the serving cell. The PSS and the SSS are mapped according to a frame structure of FDD.

An eNB is also described. The eNB includes a processor and memory in electronic communication with the processor. Instructions stored in the memory are executable to configure a LAA for a serving cell for one or more UEs. The instructions are also executable to transmit a PSS and a SSS of the serving cell. The PSS and the SSS are mapped according to a frame structure of FDD.

A method by an eNB is also described. The method includes configuring a LAA for a serving cell for one or more UEs. The method also includes transmitting a PSS and a SSS of the serving cell. The PSS and the SSS are mapped according to a frame structure of frequency-division duplexing (FDD).

A UE for receiving discovery reference signals (DRS) in a LAA serving cell is also described. The UE includes a processor and memory in electronic communication with the processor. Instructions stored in the memory are executable to receive a cell configuration of an unlicensed LAA serving cell from an eNB on a licensed LTE cell. The instructions are also executable to determine a DRS configuration. The instructions are further executable to detect and measure DRS on a configured unlicensed carrier based on the DRS configuration.

The UE may detect and measure the DRS of a LAA serving cell periodically in a fixed subframe location. The UE may detect and measure the DRS of a LAA serving cell in a fixed subframe location in a LAA set or burst of subframe transmissions.

The DRS of the LAA serving cell may be in each LAA set or burst of subframe transmissions. The DRS of the LAA serving cell may be in a first LAA set or burst of subframe transmissions within a DRS measurement timing configuration (DMTC) period.

A method for receiving DRS in an LAA serving cell by a UE is also described. The method includes receiving a cell configuration of an unlicensed LAA serving cell from an eNB on a licensed LTE cell. The method also includes determining a DRS configuration. The method further includes detecting and measuring DRS on a configured unlicensed carrier based on the DRS configuration.

An eNB for transmitting DRS in an LAA serving cell is also described. The eNB includes a processor and memory in electronic communication with the processor. Instructions stored in the memory are executable to configure an unlicensed LAA serving cell for one or more UEs. The instructions are also executable to determine a DRS configuration. The instructions are further executable to transmit DRS on a configured unlicensed carrier based on the DRS configuration.

A method for transmitting DRS in an LAA serving cell by an eNB is also described. The method includes configuring an unlicensed LAA serving cell for one or more UEs. The method also includes determining a DRS configuration. The method further includes transmitting DRS on a configured unlicensed carrier based on the DRS configuration.

The 3rd Generation Partnership Project, also referred to as "3GPP," is a collaboration agreement that aims to define globally applicable technical specifications and technical reports for third and fourth generation wireless communication systems. The 3GPP may define specifications for next generation mobile networks, systems and devices.

3GPP Long Term Evolution (LTE) is the name given to a project to improve the Universal Mobile Telecommunications System (UMTS) mobile phone or device standard to cope with future requirements. In one aspect, UMTS has been modified to provide support and specification for the Evolved Universal Terrestrial Radio Access (E-UTRA) and Evolved Universal Terrestrial Radio Access Network (E-UTRAN).

At least some aspects of the systems and methods disclosed herein may be described in relation to the 3GPP LTE, LTE-Advanced (LTE-A) and other standards (e.g., 3GPP Releases 8, 9, 10, 11 and/or 12). However, the scope of the present disclosure should not be limited in this regard. At least some aspects of the systems and methods disclosed herein may be utilized in other types of wireless communication systems.

A wireless communication device may be an electronic device used to communicate voice and/or data to a base station, which in turn may communicate with a network of devices (e.g., public switched telephone network (PSTN), the Internet, etc.). In describing systems and methods herein, a wireless communication device may alternatively be referred to as a mobile station, a UE, an access terminal, a subscriber station, a mobile terminal, a remote station, a user terminal, a terminal, a subscriber unit, a mobile device, etc. Examples of wireless communication devices include cellular phones, smart phones, personal digital assistants (PDAs), laptop computers, netbooks, e-readers, wireless modems, etc. In 3GPP specifications, a wireless communication device is typically referred to as a UE. However, as the scope of the present disclosure should not be limited to the 3GPP standards, the terms "UE" and "wireless communication device" may be used interchangeably herein to mean the more general term "wireless communication device."

In 3GPP specifications, a base station is typically referred to as a Node B, an eNB, a home enhanced or evolved Node B (HeNB) or some other similar terminology. As the scope of the disclosure should not be limited to 3GPP standards, the terms "base station," "Node B," "eNB," and "HeNB" may be used interchangeably herein to mean the more general term "base station." Furthermore, the term "base station" may be used to denote an access point. An access point may be an electronic device that provides access to a network (e.g., Local Area Network (LAN), the Internet, etc.) for wireless communication devices. The term "communication device" may be used to denote both a wireless communication device and/or a base station.

It should be noted that as used herein, a "cell" may refer to any set of communication channels over which the protocols for communication between a UE and eNB that may be specified by standardization or governed by regulatory bodies to be used for International Mobile Telecommunications-Advanced (IMT-Advanced) or its extensions and all of it or a subset of it may be adopted by 3GPP as licensed bands (e.g., frequency bands) to be used for communication between an eNB and a UE. "Configured cells" are those cells of which the UE is aware and is allowed by an eNB to transmit or receive information. "Configured cell(s)" may be serving cell(s). The UE may receive system information and perform the required measurements on all configured cells. "Activated cells" are those configured cells on which the UE is transmitting and receiving. That is, activated cells are those cells for which the UE monitors the physical downlink control channel (PDCCH) and in the case of a downlink transmission, those cells for which the UE decodes a physical downlink shared channel (PDSCH). "Deactivated cells" are those configured cells that the UE is not monitoring the transmission PDCCH. It should be noted that a "cell" may be described in terms of differing dimensions. For example, a "cell" may have temporal, spatial (e.g., geographical) and frequency characteristics.

The systems and methods disclosed may involve carrier aggregation. Carrier aggregation refers to the concurrent utilization of more than one carrier. In carrier aggregation, more than one cell may be aggregated to a UE. In one example, carrier aggregation may be used to increase the effective bandwidth available to a UE. The same TDD uplink-downlink (UL/DL) configuration has to be used for TDD carrier aggregation (CA) in Release-10, and for intra-band CA in Release-11. In Release-11, inter-band TDD CA with different TDD UL/DL configurations is supported. The inter-band TDD CA with different TDD UL/DL configurations may provide the flexibility of a TDD network in CA deployment. Furthermore, enhanced interference management with traffic adaptation (eIMTA) (also referred to as dynamic UL/DL reconfiguration) may allow flexible TDD UL/DL reconfiguration based on the network traffic load.

It should be noted that the term "concurrent" and variations thereof as used herein may denote that two or more events may overlap each other in time and/or may occur near in time to each other. Additionally, "concurrent" and variations thereof may or may not mean that two or more events occur at precisely the same time.

An FDD cell requires spectrum (e.g., radio communication frequencies or channels) in which contiguous subsets of the spectrum are entirely allocated to either UL or DL but not both. Accordingly, FDD may have carrier frequencies that are paired (e.g., paired DL and UL carrier frequencies). However, TDD does not require paired channels. Instead, TDD may allocate UL and DL resources on the same carrier frequency. Therefore, TDD may provide more flexibility on spectrum usage. With the increase in wireless network traffic, and as spectrum resources become very precious, new allocated spectrum tends to be fragmented and has smaller bandwidth, which is more suitable for TDD and/or small cell deployment. Furthermore, TDD may provide flexible channel usage through traffic adaptation with different TDD UL/DL configurations and dynamic UL/DL re-configuration.

Synchronization signals may be used to perform time and frequency synchronization of a serving cell carrier. The synchronization signals may include a primary synchronization signal (PSS) and a secondary synchronization signal (SSS). In a licensed LTE cell, the PSS and SSS broadcast periodically in fixed subframe indexes in the central 62 subcarriers of the carrier.

Licensed-assisted access (LAA) may support LTE in unlicensed spectrum. In a LAA network, the DL transmission may be scheduled in an opportunistic manner. For fairness utilization, an LAA eNB may perform functions such as clear channel assessment (CCA), listen before talk (LBT) and dynamic frequency selection (DFS). Thus, a LAA transmission may not guarantee a DL transmission in the fixed subframe location that contains the synchronization signals.

The broadcast of synchronization signals in a LAA cell may present different issues. One issue is what PSS and SSS structure should be used in a LAA cell. Another issue is which subframe should be used to carry the PSS and SSS.

Besides the PSS and SSS, the discovery signals of a serving cell may include other signals such as a channel state information-reference signal (CSI-RS) and a cell specific reference signal (CRS). The CSI-RS may be configured by upper layer signaling with a resource position and periodicity. CRS may be transmitted in a configured discovery subframe. However, in a LAA serving cell, the eNB cannot guarantee that the configured subframe can be transmitted due to listen-before-talk requirements. Thus, the same issues exist for other discovery signals as for PSS/SSS transmissions in a LAA network.

Various examples of the systems and methods disclosed herein are now described with reference to the Figures, where like reference numbers may indicate functionally similar elements. The systems and methods as generally described and illustrated in the Figures herein could be arranged and designed in a wide variety of different implementations. Thus, the following more detailed description of several implementations, as represented in the Figures, is not intended to limit scope, as claimed, but is merely representative of the systems and methods.

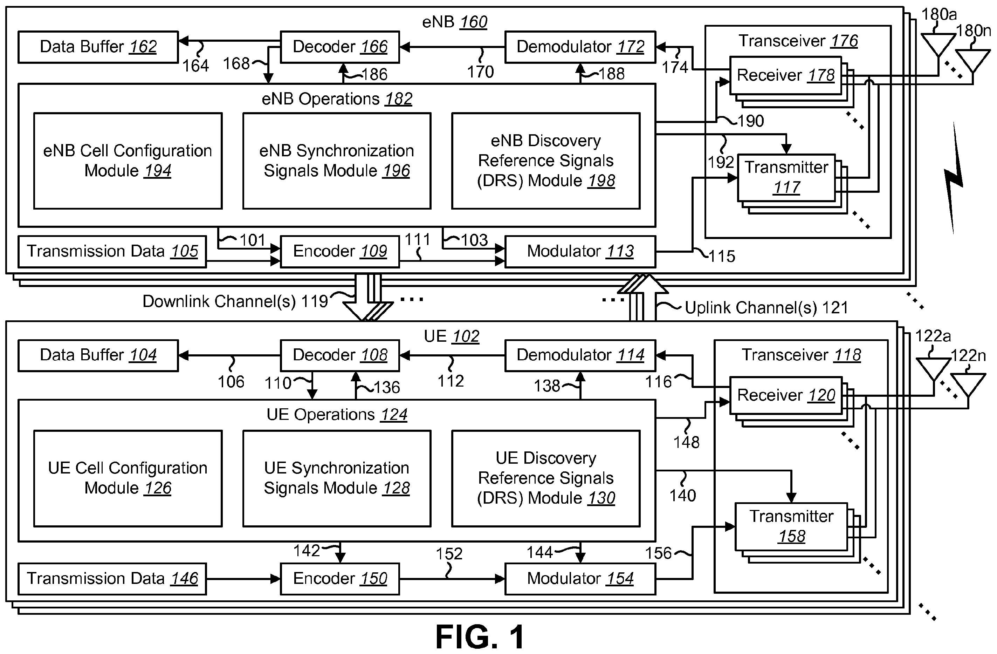

Figure 1 is a block diagram illustrating one implementation of one or more eNBs 160 and one or more UEs 102 in which systems and methods for synchronization signal and discovery signal transmission may be implemented. The one or more UEs 102 communicate with one or more eNBs 160 using one or more antennas 122a-n. For example, a UE 102 transmits electromagnetic signals to the eNB 160 and receives electromagnetic signals from the eNB 160 using the one or more antennas 122a-n. The eNB 160 communicates with the UE 102 using one or more antennas 180a-n.

The UE 102 and the eNB 160 may use one or more channels 119, 121 to communicate with each other. For example, a UE 102 may transmit information or data to the eNB 160 using one or more uplink channels 121. Examples of uplink channels 121 include a PUCCH and a PUSCH, etc. The one or more eNBs 160 may also transmit information or data to the one or more UEs 102 using one or more downlink channels 119, for instance. Examples of downlink channels 119 include a PDCCH, a PDSCH, etc. Other kinds of channels may be used.

Each of the one or more UEs 102 may include one or more transceivers 118, one or more demodulators 114, one or more decoders 108, one or more encoders 150, one or more modulators 154, a data buffer 104 and a UE operations module 124. For example, one or more reception and/or transmission paths may be implemented in the UE 102. For convenience, only a single transceiver 118, decoder 108, demodulator 114, encoder 150 and modulator 154 are illustrated in the UE 102, though multiple parallel elements (e.g., transceivers 118, decoders 108, demodulators 114, encoders 150 and modulators 154) may be implemented.

The transceiver 118 may include one or more receivers 120 and one or more transmitters 158. The one or more receivers 120 may receive signals from the eNB 160 using one or more antennas 122a-n. For example, the receiver 120 may receive and downconvert signals to produce one or more received signals 116. The one or more received signals 116 may be provided to a demodulator 114. The one or more transmitters 158 may transmit signals to the eNB 160 using one or more antennas 122a-n. For example, the one or more transmitters 158 may upconvert and transmit one or more modulated signals 156.

The demodulator 114 may demodulate the one or more received signals 116 to produce one or more demodulated signals 112. The one or more demodulated signals 112 may be provided to the decoder 108. The UE 102 may use the decoder 108 to decode signals. The decoder 108 may produce one or more decoded signals 106, 110. For example, a first UE-decoded signal 106 may comprise received payload data, which may be stored in a data buffer 104. A second UE-decoded signal 110 may comprise overhead data and/or control data. For example, the second UE-decoded signal 110 may provide data that may be used by the UE operations module 124 to perform one or more operations.

As used herein, the term "module" may mean that a particular element or component may be implemented in hardware, software or a combination of hardware and software. However, it should be noted that any element denoted as a "module" herein may alternatively be implemented in hardware. For example, the UE operations module 124 may be implemented in hardware, software or a combination of both.

In general, the UE operations module 124 may enable the UE 102 to communicate with the one or more eNBs 160. The UE operations module 124 may include one or more of a UE cell configuration module 126 synchronization signals receiving module 128 and a discovery reference signals (DRS) receiving module 130.

The UE cell configuration module 126 receives a cell configuration of an unlicensed LAA serving cell from an eNB 160. The licensed-assisted access (LAA) in unlicensed band for LTE (also referred to as LTE unlicensed or unlicensed LTE) allows opportunistic usage of an unlicensed carrier for LTE transmissions. In one implementation, only DL LAA is performed. However, in another implementation, both UL and DL transmission may be performed. The LAA transmission is assisted with a licensed band. The UE cell configuration module 126 may receive the cell configuration for the LAA serving cell on an LTE cell that is a PCell. The LAA serving cell may be a SCell.

Carrier aggregation (CA) is one operation that may be performed with an unlicensed LAA cell operating with a licensed LTE cell. With CA, the radio frame (e.g., the system frame number (SFN)) may be synchronized across all serving cells. Furthermore, the subframe indexes may also be synchronized. In a CA case, the maximum time alignment (TA) differences among serving cells is 33 microseconds.

The synchronization signals are the first signals a UE 102 receives from a serving cell to identify the cell. The synchronization signals may include a primary synchronization signal (PSS) and a secondary synchronization signal (SSS). These synchronization signals may be used to achieve radio frame, subframe, slot and symbol synchronization in the time domain, and identify the center of the channel bandwidth in the frequency domain. Thus, the synchronization signals may provide frequency synchronization for reference signals and physical channel resources.

In a licensed LTE serving cell, the synchronization signals (PSS/SSS) may be broadcast within every 10 millisecond (ms) radio frame in a fixed subframe and symbol location depending on the frame structure of the serving cell. The frame structure of the serving cell may be FDD or TDD.

In an LAA network, the DL transmission is scheduled in an opportunistic manner. For fairness utilization, a LAA eNB 160 is required to perform functions such as clear channel assessment (CCA), listen before talk (LBT) and dynamic frequency selection (DFS). Thus, a LAA transmission cannot guarantee a DL transmission in the fixed subframe location that contains the synchronization signals.

The described systems and methods provide different approaches for synchronization signal transmission and reception in a LAA serving cell. The synchronization signals receiving module 128 may determine a synchronization signal structure. The structure of PSS and SSS should follow existing LTE methods as much as possible. Therefore, the PSS/SSS may reuse existing PSS/SSS signals. However, the location of the PSS/SSS is not fixed based on the subframe index as in a LTE serving cell.

In a first approach, the synchronization signals receiving module 128 may determine the synchronization signal structure based on the PSS and SSS structure of a FDD serving cell. Therefore, the relative locations of the PSS and the SSS are based on the FDD serving cell.

In a second approach, the synchronization signals receiving module 128 may determine the synchronization signal structure based on the PSS and SSS structure and relative location of a duplexing method of a licensed primary cell. In this approach, the relative location of the PSS and the SSS may be based on the licensed PCell frame structure.

In a third approach, the synchronization signals receiving module 128 may determine the synchronization signal structure based on whether the LAA serving cell supports downlink (DL) and uplink (UL) transmissions. In this approach, if the LAA serving cell supports only DL transmissions, the synchronization signal structure of the LAA serving cell is determined by the PSS and SSS structure and relative location of a FDD serving cell.

If the LAA serving cell supports both DL and UL transmissions, the synchronization signal structure of the LAA serving cell is determined by the PSS and SSS structure and relative location of a TDD serving cell. For a TDD serving cell, a relative position of the PSS and the SSS of the TDD serving cell may be maintained, but the location of the PSS and the SSS may be shifted (compared to LTE systems) so that the PSS and the SSS are in the same subframe. Therefore, the PSS and the SSS locations for the LAA serving cell may be in different subframes or symbols as compared to the LTE systems.

In a fourth approach, the synchronization signal structure of the LAA serving cell is configured by the eNB 160. In this approach, the PSS/SSS relative location is configured by the eNB 160.

The synchronization signals receiving module 128 may search for, detect and decode the synchronization signals on a configured unlicensed carrier based on the synchronization signal structure. The synchronization signals receiving module 128 may receive the PSS and the SSS of the LAA serving cell on the configured unlicensed carrier.

Different approaches can be considered for synchronization signal transmission in a LAA cell. In a first approach, the LAA cell may broadcast the PSS and the SSS in a fixed subframe location in a radio frame. The PSS/SSS may be allocated in the first LAA DL subframe of each occurrence of a LAA DL transmission. Therefore, the synchronization signals receiving module 128 may detect and measure the synchronization signals of the LAA serving cell in a fixed subframe location in a radio frame.

In a second approach for synchronization signal transmission in a LAA cell, the LAA cell may broadcast the PSS and the SSS in a fixed subframe location in a LAA set or burst of subframe transmissions. Therefore, the synchronization signals receiving module 128 may detect and measure the PSS and the SSS of the LAA serving cell in a fixed subframe location in a LAA set or a burst of subframe transmissions. The PSS and the SSS of the LAA serving cell may be in the first subframe in the LAA set or burst of subframe transmissions. Alternatively, the PSS and the SSS of the LAA serving cell may be in a fixed subframe index within the LAA set or burst of subframe transmissions.

The synchronization signals receiving module 128 may perform subframe synchronization, slot synchronization and frequency synchronization for the LAA serving cell based on the detected PSS and SSS. In a LAA cell, the PSS/SSS may be used to provide subframe, slot synchronization and frequency synchronization. The radio frame synchronization may be provided by the licensed serving cell.

Besides PSS and SSS, the discovery signals of a serving cell may include other signals such as CSI-RS and CRS. The CSI-RS may be configured by upper layer signaling with a resource position and periodicity. CRS may be transmitted in a configured discovery subframe. However, in a LAA serving cell, the eNB 160 cannot guarantee that the configured subframe can be transmitted due to listen-before-talk requirements. Thus, the same issue exists for other discovery signals as for PSS/SSS transmissions in a LAA network, and similar methods can be applied to other discovery signals as for PSS/SSS.

The DRS receiving module 130 may determine a DRS configuration. A LAA cell may be suitable to be configured as a secondary small cell. The DRS may be applied to a LAA cell with a DRS measurement timing configuration (DMTC) configuration. A DRS measurement timing configuration DMTC may be configured for each frequency carrier. The DMTC may have a periodicity and offset.

The DRS receiving module 130 may detect and measure discovery reference signals on a configured unlicensed carrier based on the DRS configuration. It should be noted that the PSS and SSS may be included as a part of the DRS.

In a first approach, the LAA cell may transmit DRS according to the configuration as in a licensed cell. In this approach, the DRS receiving module 130 may detect and measure the discovery reference signals of the LAA serving cell periodically in a fixed subframe location. If the subframe is not occupied by LAA transmission following CCA and LBT procedures, the DRS may be broadcast as in regular LTE subframes. However, if the subframe is occupied by other unlicensed transmissions, the LAA cell may follow the CCA and LBT procedures and, thus, should not transmit a LAA subframe. Therefore, in one implementation, the DRS may be dropped if the LAA cell senses that the channel is busy. In another implementation, to keep the DRS broadcasting, only configured DRS may be transmitted, and no signals should be transmitted in other areas of the LAA subframe.

In a second approach for DRS transmissions in a LAA cell, the DRS receiving module 130 may detect and measure the DRS of the LAA serving cell in a fixed subframe location in a LAA set or burst of subframe transmissions. The LAA cell may broadcast DRS in a fixed subframe location in a LAA set or burst of subframe transmissions. In one implementation, the DRS of the LAA serving cell may be transmitted in the first several subframes of each LAA set or burst of subframe transmissions. In another implementation, with reduced DRS density, the DRS of the LAA serving cell may be always transmitted in the first LAA set or burst of subframe transmissions within a DMTC period. The DRS occasion may be in the range of 1 to 5 subframes.

The UE operations module 124 may provide information 148 to the one or more receivers 120. For example, the UE operations module 124 may inform the receiver(s) 120 when to receive retransmissions.

The UE operations module 124 may provide information 138 to the demodulator 114. For example, the UE operations module 124 may inform the demodulator 114 of a modulation pattern anticipated for transmissions from the eNB 160.

The UE operations module 124 may provide information 136 to the decoder 108. For example, the UE operations module 124 may inform the decoder 108 of an anticipated encoding for transmissions from the eNB 160.

The UE operations module 124 may provide information 142 to the encoder 150. The information 142 may include data to be encoded and/or instructions for encoding. For example, the UE operations module 124 may instruct the encoder 150 to encode transmission data 146 and/or other information 142. The other information 142 may include PDSCH HARQ-ACK information.

The encoder 150 may encode transmission data 146 and/or other information 142 provided by the UE operations module 124. For example, encoding the data 146 and/or other information 142 may involve error detection and/or correction coding, mapping data to space, time and/or frequency resources for transmission, multiplexing, etc. The encoder 150 may provide encoded data 152 to the modulator 154.

The UE operations module 124 may provide information 144 to the modulator 154. For example, the UE operations module 124 may inform the modulator 154 of a modulation type (e.g., constellation mapping) to be used for transmissions to the eNB 160. The modulator 154 may modulate the encoded data 152 to provide one or more modulated signals 156 to the one or more transmitters 158.

The UE operations module 124 may provide information 140 to the one or more transmitters 158. This information 140 may include instructions for the one or more transmitters 158. For example, the UE operations module 124 may instruct the one or more transmitters 158 when to transmit a signal to the eNB 160. For instance, the one or more transmitters 158 may transmit during a UL subframe. The one or more transmitters 158 may upconvert and transmit the modulated signal(s) 156 to one or more eNBs 160.

The eNB 160 may include one or more transceivers 176, one or more demodulators 172, one or more decoders 166, one or more encoders 109, one or more modulators 113, a data buffer 162 and an eNB operations module 182. For example, one or more reception and/or transmission paths may be implemented in an eNB 160. For convenience, only a single transceiver 176, decoder 166, demodulator 172, encoder 109 and modulator 113 are illustrated in the eNB 160, though multiple parallel elements (e.g., transceivers 176, decoders 166, demodulators 172, encoders 109 and modulators 113) may be implemented.

The transceiver 176 may include one or more receivers 178 and one or more transmitters 117. The one or more receivers 178 may receive signals from the UE 102 using one or more antennas 180a-n. For example, the receiver 178 may receive and downconvert signals to produce one or more received signals 174. The one or more received signals 174 may be provided to a demodulator 172. The one or more transmitters 117 may transmit signals to the UE 102 using one or more antennas 180a-n. For example, the one or more transmitters 117 may upconvert and transmit one or more modulated signals 115.

The demodulator 172 may demodulate the one or more received signals 174 to produce one or more demodulated signals 170. The one or more demodulated signals 170 may be provided to the decoder 166. The eNB 160 may use the decoder 166 to decode signals. The decoder 166 may produce one or more decoded signals 164, 168. For example, a first eNB-decoded signal 164 may comprise received payload data, which may be stored in a data buffer 162. A second eNB-decoded signal 168 may comprise overhead data and/or control data. For example, the second eNB-decoded signal 168 may provide data (e.g., PDSCH HARQ-ACK information) that may be used by the eNB operations module 182 to perform one or more operations.

In general, the eNB operations module 182 may enable the eNB 160 to communicate with the one or more UEs 102. The eNB operations module 182 may include one or more of an eNB cell configuration module 194, an eNB synchronization signals module 196 and an eNB DRS module 198.

The eNB cell configuration module 194 may configure an unlicensed LAA serving cell for one or more UEs 102. As described above, a LAA serving cell allows opportunistic usage of unlicensed carrier for LTE transmissions. The eNB cell configuration module 194 may transmit the cell configuration for the LAA serving cell on an LTE cell that is a PCell. The LAA serving cell may be an SCell.

The eNB synchronization signals module 196 may determine a synchronization signal structure. As described above, the synchronization signals may include the PSS and the SSS.

In a first approach, the eNB synchronization signals module 196 may determine the synchronization signal structure based on the PSS and SSS structure of a FDD serving cell. FDD PSS/SSS relative location may be used in a LAA serving cell.

In a second approach, the eNB synchronization signals module 196 may determine the synchronization signal structure based on the PSS and SSS structure and relative location of a duplexing method of a licensed primary cell. In this approach, the PSS/SSS relative location may be determined by the licensed PCell frame structure.

In a third approach, the eNB synchronization signals module 196 may determine the synchronization signal structure based on whether the LAA serving cell supports downlink (DL) and uplink (UL) transmissions. In this approach, if the LAA serving cell supports only DL transmissions, the synchronization signal structure of the LAA serving cell is determined by the PSS and SSS structure and relative location of a FDD serving cell.

If the LAA serving cell supports both DL and UL transmissions, the synchronization signal structure of the LAA serving cell is determined by the PSS and SSS structure and relative location of a TDD serving cell. For a TDD serving cell, a relative position of the PSS and the SSS of the TDD serving cell may be maintained, but the location of the PSS and the SSS may be shifted (compared to LTE systems) so that the PSS and the SSS are in the same subframe.

In a fourth approach, the synchronization signal structure of the LAA serving cell is configured by the eNB 160. In this approach, the PSS/SSS relative location may be configured by the eNB synchronization signals module 196.

The eNB synchronization signals module 196 may transmit the PSS and the SSS on a configured unlicensed carrier based on the synchronization signal structure. The eNB synchronization signals module 196 may transmit the PSS and the SSS of LAA serving cell on the configured unlicensed carrier.

Different approaches can be considered for synchronization signal transmission in a LAA cell. In a first approach, the LAA cell may broadcast the PSS and the SSS in a fixed subframe location in a radio frame. Therefore, the eNB synchronization signals module 196 may transmit the PSS and the SSS of the LAA serving cell in a fixed subframe location in a radio frame.

In a second approach for synchronization signal transmission in a LAA cell, the LAA cell may broadcast PSS and SSS in a fixed subframe location in a LAA set or burst of subframe transmissions. Therefore, the eNB synchronization signals module 196 may transmit the PSS and the SSS of the LAA serving cell in a fixed subframe location in a LAA set or a burst of subframe transmissions. The PSS and the SSS of the LAA serving cell may be in the first subframe in the LAA set or burst of subframe transmissions. Alternatively, the PSS and the SSS of the LAA serving cell may be in a fixed subframe index within the LAA set or burst of subframe transmissions.

As with the PSS and SSS, the eNB 160 may transmit DRS in a LAA serving cell. The eNB DRS module 198 may determine a DRS configuration. Discovery signals may be used for a LAA serving cell. The DRS may be applied to a LAA cell with a DMTC configuration. Besides PSS and SSS discussed above, the discovery signals of a LAA serving cell may include other signals such as CSI-RS and CRS.

The eNB DRS module 198 may transmit discovery reference signals on a configured unlicensed carrier based on the DRS configuration. In a first approach, the LAA cell may transmit DRS according to the configuration as in a licensed cell. In this approach, the eNB DRS module 198 may transmit the discovery reference signals of the LAA serving cell periodically in a fixed subframe location, as described above.

In a second approach for DRS transmissions in a LAA cell, the eNB DRS module 198 may transmit the discovery reference signals of the LAA serving cell in a fixed subframe location in a LAA set or burst of subframe transmissions. In this approach, the LAA cell may broadcast DRS in a fixed subframe location in a LAA set or burst of subframe transmissions. In one implementation, the eNB DRS module 198 may transmit the DRS of the LAA serving cell in the first several subframes of each LAA set or burst of subframe transmissions. In another implementation, with reduced DRS density, the eNB DRS module 198 may always transmit the DRS of the LAA serving cell in the first LAA set or burst of subframe transmissions within a DMTC period.

The eNB operations module 182 may provide information 190 to the one or more receivers 178. For example, the eNB operations module 182 may inform the receiver(s) 178 when or when not to receive information based on the PSS and SSS.

The eNB operations module 182 may provide information 188 to the demodulator 172. For example, the eNB operations module 182 may inform the demodulator 172 of a modulation pattern anticipated for transmissions from the UE(s) 102.

The eNB operations module 182 may provide information 186 to the decoder 166. For example, the eNB operations module 182 may inform the decoder 166 of an anticipated encoding for transmissions from the UE(s) 102.

The eNB operations module 182 may provide information 101 to the encoder 109. The information 101 may include data to be encoded and/or instructions for encoding. For example, the eNB operations module 182 may instruct the encoder 109 to encode transmission data 105 and/or other information 101.

The encoder 109 may encode transmission data 105 and/or other information 101 provided by the eNB operations module 182. For example, encoding the data 105 and/or other information 101 may involve error detection and/or correction coding, mapping data to space, time and/or frequency resources for transmission, multiplexing, etc. The encoder 109 may provide encoded data 111 to the modulator 113. The transmission data 105 may include network data to be relayed to the UE 102.

The eNB operations module 182 may provide information 103 to the modulator 113. This information 103 may include instructions for the modulator 113. For example, the eNB operations module 182 may inform the modulator 113 of a modulation type (e.g., constellation mapping) to be used for transmissions to the UE(s) 102. The modulator 113 may modulate the encoded data 111 to provide one or more modulated signals 115 to the one or more transmitters 117.

The eNB operations module 182 may provide information 192 to the one or more transmitters 117. This information 192 may include instructions for the one or more transmitters 117. For example, the eNB operations module 182 may instruct the one or more transmitters 117 when to (or when not to) transmit a signal to the UE(s) 102. In some implementations, this may be based on the PSS and SSS. The one or more transmitters 117 may upconvert and transmit the modulated signal(s) 115 to one or more UEs 102.

It should be noted that a DL subframe may be transmitted from the eNB 160 to one or more UEs 102 and that a UL subframe may be transmitted from one or more UEs 102 to the eNB 160. Furthermore, both the eNB 160 and the one or more UEs 102 may transmit data in a standard special subframe.

It should also be noted that one or more of the elements or parts thereof included in the eNB(s) 160 and UE(s) 102 may be implemented in hardware. For example, one or more of these elements or parts thereof may be implemented as a chip, circuitry or hardware components, etc. It should also be noted that one or more of the functions or methods described herein may be implemented in and/or performed using hardware. For example, one or more of the methods described herein may be implemented in and/or realized using a chipset, an application-specific integrated circuit (ASIC), a large-scale integrated circuit (LSI) or integrated circuit, etc.

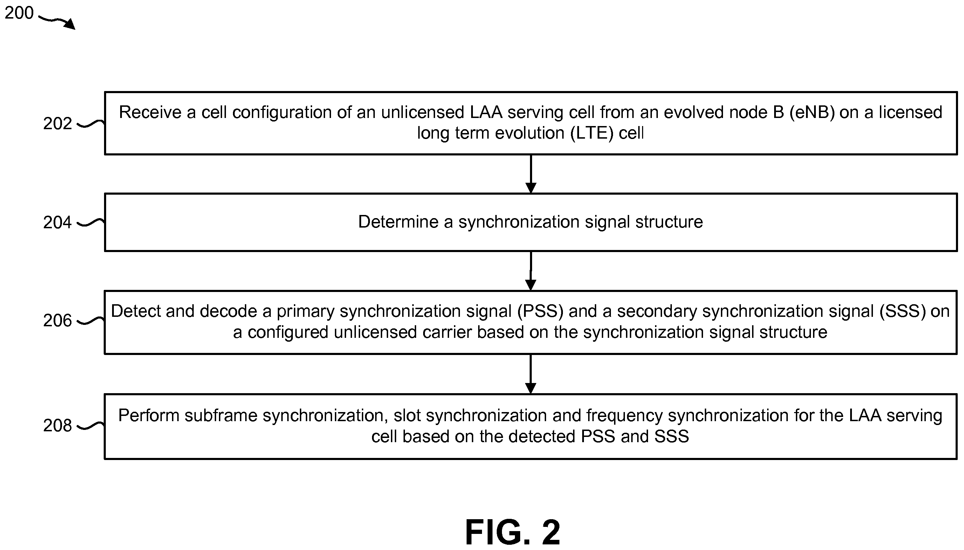

Figure 2 is a flow diagram illustrating one implementation of a method 200 for receiving synchronization signals in a LAA serving cell. The method 200 may be implemented by a UE 102. The UE 102 may communicate with one or more eNBs 160 in a wireless communication network. In one implementation, the wireless communication network may include an LTE network.

The UE 102 may receive 202 a cell configuration of an unlicensed LAA serving cell from an eNB 160 on a licensed LTE cell. When a UE 102 is powered-on, the UE 102 may attempt to find a suitable cell to camp-on. However, in-order to camp on a particular cell, the UE 102 may perform a number of activities. For example, the UE 102 may perform a frequency search. The UE 102 may also perform cell synchronization. The UE 102 may further determine a physical cell ID. The UE 102 may additionally read a master information block (MIB).

When the UE 102 is switched on, it may scan and tune its radio to a frequency depending on which band it is supporting. If the UE 102 is tuned to a particular frequency channel, it will try finding the PSS and SSS. In one approach, the PSS may be transmitted in the last OFDM symbol of first time slot of the first and sixth sub-frame of a radio frame. From the PSS, the UE 102 may obtain a cell identity in group ranges from 0 to 2.

Once the UE 102 obtains the PSS, the UE 102 may next obtain the SSS. The SSS signals may be transmitted in the same sub-frame as the PSS but in the symbol just before PSS. From the SSS, the UE 102 may obtain physical layer cell identity group ranges from 0 to 167.

Using the cell identity in the group and physical cell identity group number, the UE 102 may calculate a physical cell ID (PCI) for a cell. This may be accomplished according to PCI = 3*(Physical Cell Identity Group) + (Cell Identity In Group). Using this equation for the PCI, 504 unique physical cell identities can be created. Using this PCI, the UE 102 may detect the cell specific reference signal (CRS) that is used in channel estimation and cell selection.

A frequency search and cell synchronization procedure may be summarized as follows. The UE 102 may be switched on. The UE 102 may find a frequency and tune its radio to the frequency. The UE 102 may find the PSS and the SSS to determine the physical cell ID. Using this physical cell ID, the UE 102 may find the reference signal for channel estimation and cell selection. After obtaining the physical cell ID and reference signal location, the UE 102 will be able to read the MIB.

Upon reading the MIB, the UE 102 may proceed with reading other system information blocks (SIBs) and may perform cell selection. As demonstrated by this discussion, if the cell synchronization procedure fails and UE 102 is unable to determine the physical cell ID, camping on a cell may not succeed.

For a secondary serving cell (SCell), the cell configuration may be provided by the primary cell (PCell) radio resource control (RRC) configuration. A UE 102 may not be required to monitor the physical broadcast channel (PBCH) on a secondary cell (SCell). However, the PSS and SSS synchronization signals are still needed to perform time and frequency synchronization of the SCell. Therefore, the UE 102 receives the cell configuration for the LAA serving cell that is an SCell from an eNB 160 on an LTE cell that is the PCell.

The UE 102 may determine 204 a synchronization signal structure. There may be both FDD and TDD versions of LTE broadcast synchronization signals in the downlink (DL) direction. As described above, these synchronization signals may include the PSS and the SSS. The synchronization signals may be broadcast within every 10 ms radio frame. The UE 102 may use the synchronization signals to achieve radio frame, subframe, slot and symbol synchronization in the time domain. The UE 102 may also use the synchronization signals to identify the center of the channel bandwidth in the frequency domain. The UE 102 may further use the synchronization signals to deduce the PCI.

Detecting the synchronization signals may be a prerequisite to measuring the cell-specific reference signals and decoding the MIB on the PBCH. In one implementation, the PSS is broadcast twice during every radio frame and both transmissions are identical. The SSS may also be broadcast twice within every radio frame. The two transmissions of the SSS are different so the UE 102 can detect which is the first and which is the second transmission. It should be noted that the PSS cannot be used to achieve radio frame synchronization because both transmissions within the radio frame are identical and equally spaced in time.

The PSS may be used to achieve subframe, slot and symbol synchronization in the time domain. The PSS may also be used to identify the center of the channel bandwidth in the frequency domain. The PSS may further be used to deduce a pointer towards one of 3 PCI. PCI may be organized into 168 groups of 3. Therefore, the PSS identifies the position of the PCI within the group but does not identify the group itself.

The SSS may be used to achieve radio frame synchronization. The SSS may also be used to deduce a pointer towards one of 168 PCI groups. The SSS may also allow the PCI to be deduced when combined with the pointer from the PSS.

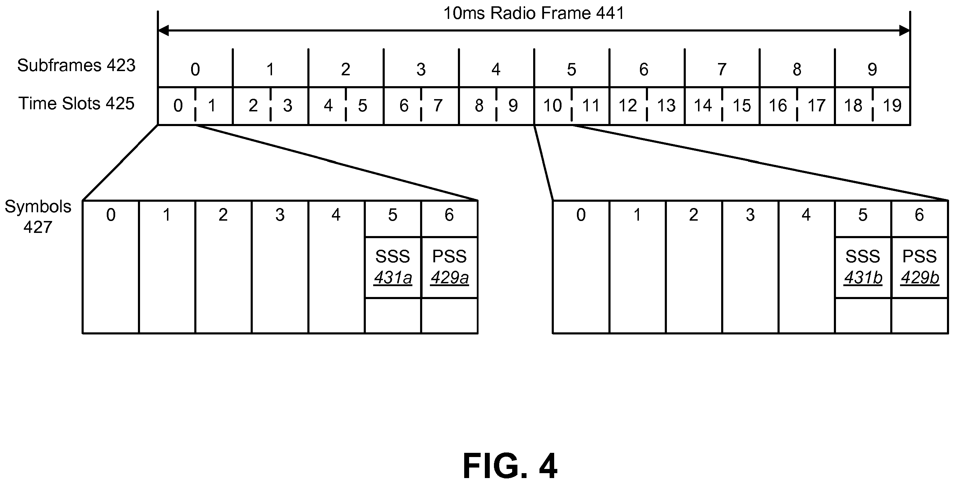

In the case of FDD, the PSS may be broadcast using the central 62 subcarriers belonging to the last symbol of time slots 0 and 10. Furthermore, in the case of FDD, the SSS may be broadcast using the central 62 subcarriers belonging to the second to last symbol of time slots 0 and 10. An example of PSS and SSS timing for FDD is described in connection with Figure 4.

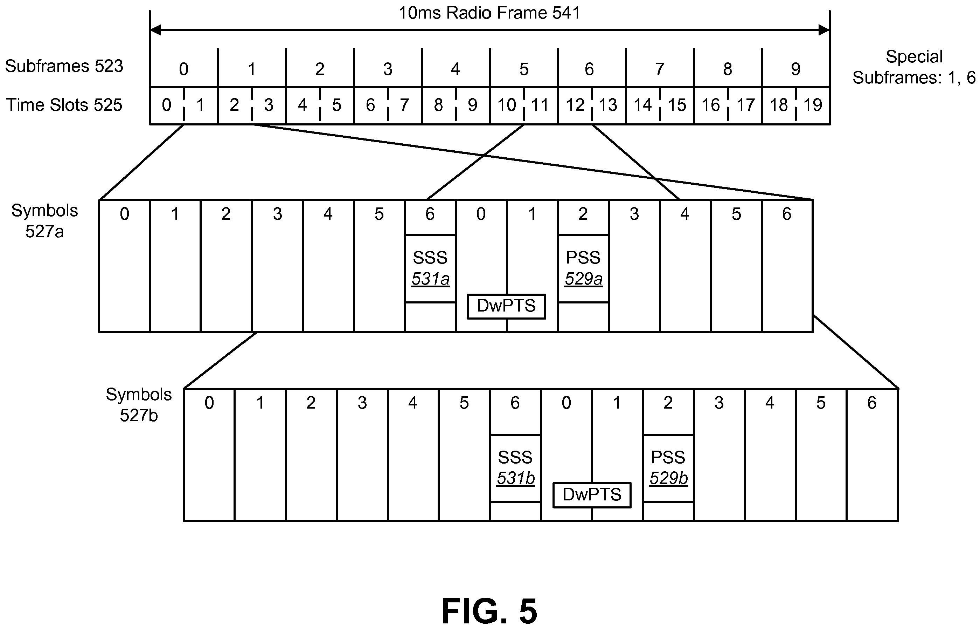

In the case of TDD, the PSS is broadcast using the central 62 subcarriers belonging to the third symbol of time slot 2 (e.g., subframe 1) and the third symbol of time slot 12 (e.g., subframe 6). Furthermore, in the case of TDD, the SSS is broadcast using the central 62 subcarriers belonging to the last symbol of time slot 1 (subframe 0) and the last symbol of time slot 11 (subframe 5). An example of PSS and SSS timing for TDD is described in connection with Figure 5.

The set of resource elements allocated to the synchronization signals may be independent of the channel bandwidth. The UE 102 may not require any knowledge of the channel bandwidth prior to detecting the synchronization signals. The downlink channel bandwidth may be subsequently read from the MIB on the PBCH.

In a LAA network, DL transmission is scheduled in an opportunistic manner. For co-existence with other networks on the same carrier, such as WiFi or LAA of the same or a different operator, a LAA eNB 160 may perform some functions to minimize interference. These functions may include clear channel assessment (CCA), listen before talk (LBT) and dynamic frequency selection (DFS). Thus, a LAA transmission may not guarantee a DL transmission in the fixed subframe location that contains the synchronization signals.

Therefore, a first LAA subframe transmission may need to perform carrier sensing, and if there is no ongoing transmission, the LAA subframe may be transmitted. Otherwise, the LAA cell should defer the transmission and perform a clear channel assessment again at the next subframe boundary.

In LAA, the serving cell should be synchronized with a licensed cell with a maximum timing advance difference of 33 microseconds. The time used for carrier sensing and CCA will be removed from the first LAA subframe transmission. Thus, the first LAA subframe may reserve several OFDM symbols for CCA (e.g., 1 or 2 or 3 OFDM symbols can be used for carrier sensing). If the channel is idle in the reserved period, a LAA subframe can be transmitted. The first LAA subframe may be a reduced LTE subframe with fewer OFDM symbols by removing the reserved length for carrier sensing.

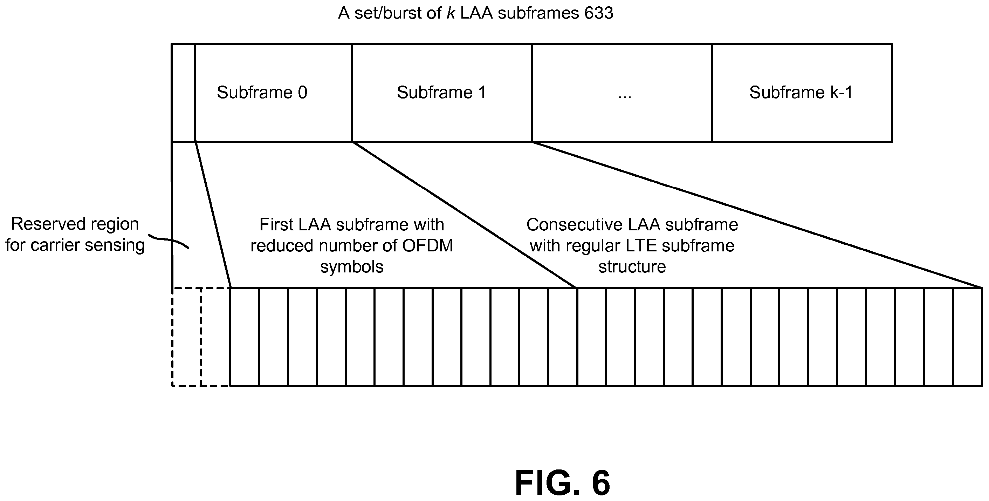

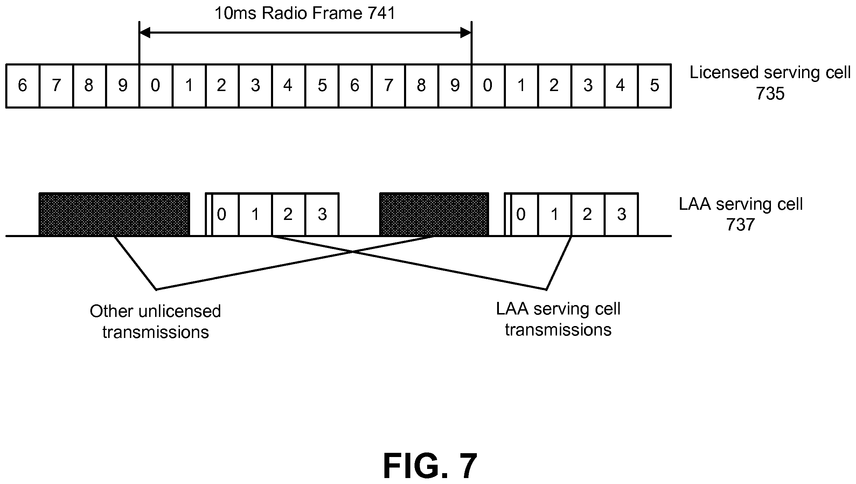

To provide fairness to other networks on the same unlicensed carrier, the eNB 160 may configure a maximum number of continuous subframe transmissions k in a LAA cell (e.g., a set of LAA subframes or a burst of LAA subframes). The maximum transmission time in an unlicensed carrier may be different in different regions and/or countries based on the regulatory requirements. For example, the maximum transmission time during an unlicensed transmission may be approximately 4 ms in Japan; the maximum transmission time during unlicensed transmission is 10 ms in Europe. In one approach, the maximum number of continuous subframe transmissions k may be implicitly determined by the region/country regulator requirement. In another approach, the maximum number of continuous subframe transmissions k may be explicitly configured by higher layer signaling. An example of a LAA subframe burst transmission is described in connection with Figure 6. An example of LAA transmissions with coexistence of other unlicensed transmissions is described in connection with Figure 7.

As described above, the synchronization signals may be the first signals that a UE 102 needs to search for in order to obtain the cell ID, time and frequency synchronization. The synchronization signals may be in fixed locations in a licensed LTE cell. However, in a LAA serving cell, because of potential transmissions from other unlicensed networks (e.g., WiFi or other LAA cell), the eNB 160 may not guarantee that the synchronization signal can be transmitted in fixed subframe indexes, as shown in Figure 7.

Different approaches may be used for transmission of synchronization signals in LAA cells. To reuse proven LTE technologies, in a LAA cell, the PSS and SSS sequences of LTE should be reused. The PSS and SSS should be broadcast using the central 62 subcarriers. Furthermore, the structure and relative positions between PSS and SSS should be preserved.

The structure of PSS and SSS may follow existing LTE technologies as much as possible. However, with this approach, an issue is which PSS/SSS structure and relative location should be used: a FDD or a TDD type.

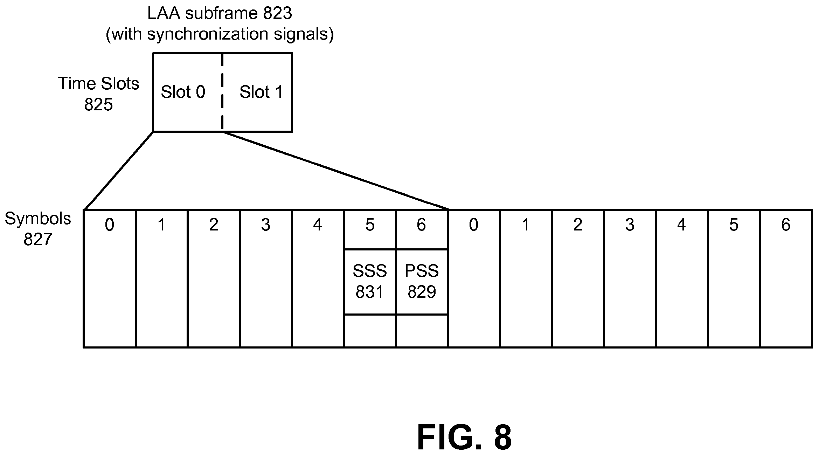

A benefit of FDD PSS/SSS is that the SSS and PSS are continuous in time. Thus, in a LAA cell with PSS/SSS structure following FDD cell (i.e., a frame structure type 1), the SSS may be broadcast using the central 62 subcarriers belonging to the second to last symbol of time slots 0 of a LAA subframe carrying synchronization signal. The PSS may be broadcast using the central 62 subcarriers belonging to the last symbol of time slots 0 of a LAA subframe carrying synchronization signal. An example of a LAA synchronization signal structure that follows a FDD type is described in connection with Figure 8.

The TDD type synchronization signals may be located in two subframes. The second subframe may be a DL subframe or a special subframe. The TDD type synchronization signals may be separated by two OFDM symbols, as described above. A LAA cell may use the same PSS and SSS location as in a licensed serving cell. If the same TDD PSS and SSS structure is used, the PSS and SSS will be transmitted in two consecutive subframes.

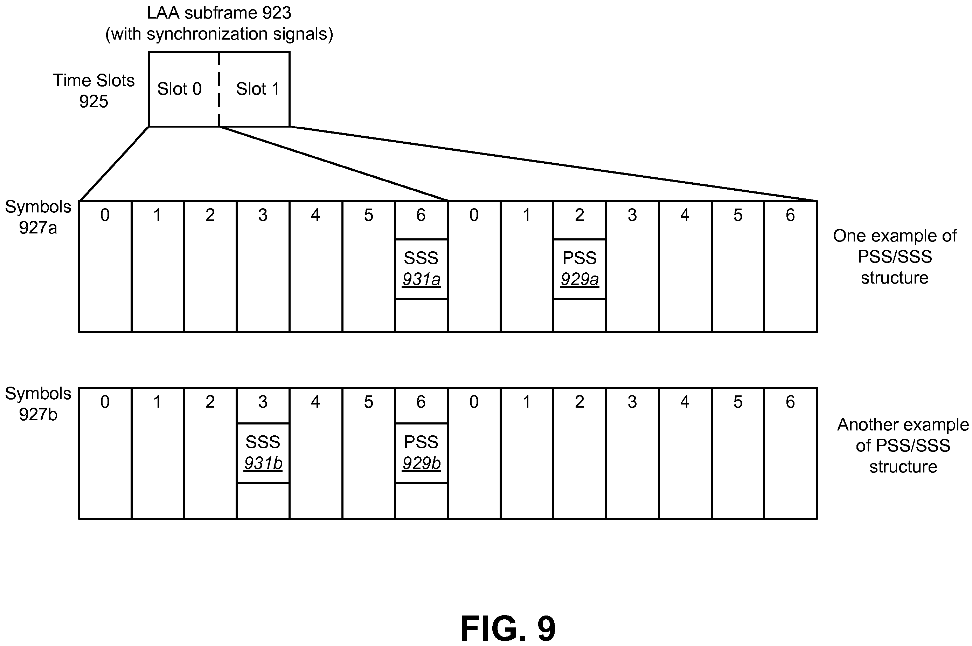

However, for a LAA cell, it is not suitable to distribute the PSS/SSS into two subframes for fairness with other unlicensed transmissions. If there is no data to be transmitted, a LAA cell should not occupy another subframe just to send the synchronization signals. Therefore, if the synchronization signal structure of the LAA serving cell is determined by the PSS and SSS structure of a TDD serving cell (e.g., if the TDD type synchronization signals are used), the relative position of PSS and SSS can be maintained, but the location of PSS and SSS should be shifted so that the PSS and SSS are in the same subframe. An example of a LAA synchronization signal structure that follows a TDD type is described in connection with Figure 9.

There are several approaches that can be considered to determine the PSS/SSS structure and relative location in a LAA cell. In a first approach, the UE 102 may determine 204 the synchronization signal structure based on the PSS and SSS structure of a FDD serving cell. The FDD PSS/SSS relative location may be used in a LAA serving cell. A benefit of the FDD PSS/SSS approach is that the SSS and PSS are continuous in time. For a LAA cell that supports DL only, the LAA cell can be regarded as a FDD DL carrier, thus FDD PSS/SSS is a better fit. For a LAA cell that supports both UL and DL transmissions, the FDD PSS/SSS relative location can also be used for its simplicity and continuous transmission.

In a second approach, the UE 102 may determine 204 the synchronization signal structure based on the PSS and SSS structure and relative location of a duplexing method of a licensed primary cell. In this approach, the PSS/SSS relative location may be determined by the licensed PCell frame structure. If the licensed PCell has FDD structure (i.e., subframe frame structure type 1), the FDD PSS/SSS structure and relative position should be used. If the licensed PCell has a TDD structure (i.e., a subframe frame structure type 2), the TDD PSS/SSS structure and relative position should be used.

In a third approach, the UE 102 may determine 204 the synchronization signal structure based on whether the LAA serving cell supports downlink (DL) and uplink (UL) transmissions. In this approach, the PSS/SSS relative location may be determined by whether the LAA cell supports both DL and UL transmissions. If a LAA cell is configured with only DL transmissions, the FDD PSS/SSS structure and relative position should be used. Therefore, if the LAA serving cell supports only DL transmissions, the synchronization signal structure of the LAA serving cell is determined by the PSS and SSS structure and relative location of a FDD serving cell.

If a LAA cell is configured with both UL and DL transmissions, the TDD PSS/SSS structure and relative position should be used. Therefore, if the LAA serving cell supports both DL and UL transmissions, the synchronization signal structure of the LAA serving cell is determined by the PSS and SSS structure and relative location of a TDD serving cell.

In a fourth approach, the synchronization signal structure of the LAA serving cell is configured by the eNB 160. In this approach, the PSS/SSS relative location is configured by the eNB 160. This approach may provide more flexibility.

If the synchronization signal structure of the LAA serving cell is determined by the PSS and SSS structure of a TDD serving cell (e.g., if the TDD type synchronization signals are used), the relative position of PSS and SSS can be maintained, but the location of PSS and SSS may be shifted so that the PSS and SSS are in the same subframe. Alternatively, when PSS and SSS following TDD structure are transmitted, at least two consecutive LAA subframes should be transmitted.

The UE 1 detects and decodes 206 the PSS and the SSS on a configured unlicensed carrier based on the synchronization signal structure. The LAA serving cell transmits the PSS and the SSS on the configured unlicensed carrier. Because of carrier sensing and deferred transmission, how to determine the transmission location of the PSS and the SSS in a LAA cell may need to be defined.

Different approaches can be considered for synchronization signal transmission in a LAA cell. In a first approach, the LAA cell may broadcast the PSS and the SSS in a fixed subframe location in a radio frame. Therefore, the UE 102 may detect and decode 206 the synchronization signals of the LAA serving cell in a fixed subframe location in a radio frame. This approach may be similar to a licensed cell.

If the subframe is not occupied by other transmissions, the LAA transmission may follow CCA and LBT procedures, and the PSS and SSS may be broadcast as in regular LTE subframes. However, if the subframe is occupied by other unlicensed transmissions (e.g. another LAA or WiFi transmission), the LAA cell may follow the CCA and LBT procedures, but should not transmit a LAA subframe. Two approaches may be considered for this case.

In a first approach for the case when a subframe is occupied by other unlicensed transmissions, the LAA cell may defer the transmission in the subframe, and the corresponding PSS/SSS may be dropped. Thus, the UE 102 may detect PSS/SSS in a fixed location, but may expect the PSS/SSS is not transmitted. If the PSS/SSS is not detected in the fixed location, the subframe should also be dropped.

In a second approach for the case when a subframe is occupied by other unlicensed transmissions, to keep the PSS and SSS broadcasting, only PSS and SSS may be transmitted, and no other signals are transmitted in other areas of the LAA subframe. Although this approach may violate the listen before talk principle, this approach also has several benefits. For example, it is backward compatible with licensed LTE synchronization and cell search methods. Furthermore, the PSS and SSS only occupy the central 62 subcarriers of two OFDM symbols in the subframe, and may not cause a significant interference to other transmissions on the same unlicensed band.

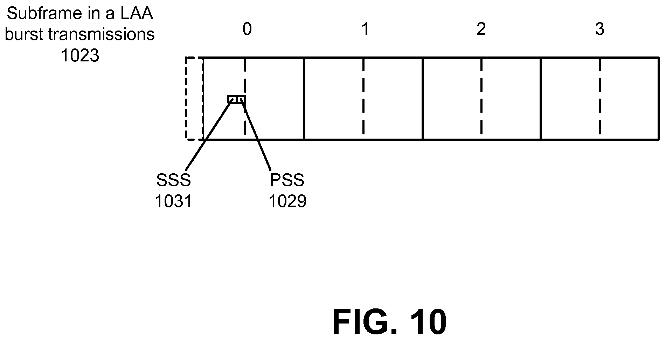

In a second approach for synchronization signal transmission in a LAA cell, the LAA cell may broadcast PSS and SSS in a fixed subframe location in a LAA set or burst of subframe transmissions. Therefore, the UE 102 may detect and decode 206 the PSS and the SSS of the LAA serving cell in a fixed subframe location in a LAA set or a burst of subframe transmissions. The synchronization signals may always be transmitted in the first subframe of each occurrence of a LAA set or burst of subframe transmissions. Therefore, the PSS and the SSS of the LAA serving cell may be in the first subframe in the LAA set or burst of subframe transmissions. Alternatively, the PSS and the SSS of the LAA serving cell may be in a fixed subframe index within the LAA set or burst of subframe transmissions. An example of a FDD PSS/SSS structure in a burst of LAA subframe transmissions is described in connection with Figure 10.

The UE 102 performs 208 subframe synchronization, slot synchronization and frequency synchronization for the LAA serving cell based on the detected PSS and SSS. In a LAA cell, the PSS/SSS may be used to provide subframe, slot synchronization and frequency synchronization. The radio frame synchronization is provided by the licensed serving cell.

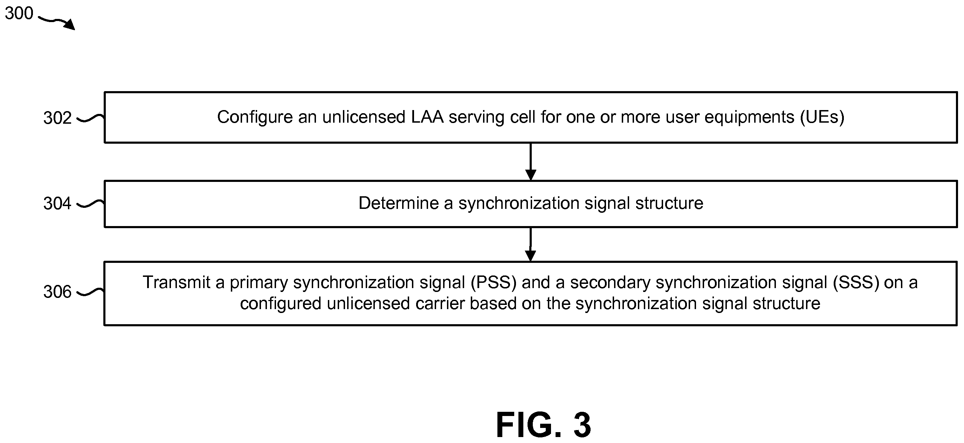

Figure 3 is a flow diagram illustrating on implementation of a method 300 for transmitting synchronization signals in a LAA serving cell. The method 300 may be implemented by an eNB 160. The eNB 160 may communicate with one or more UEs 102 in a wireless communication network. In one implementation, the wireless communication network may include an LTE network.

The eNB 160 configures 302 an unlicensed LAA serving cell for one or more UEs 102. As described above, a LAA serving cell allows opportunistic usage of unlicensed carrier for LTE transmissions. The eNB 160 transmits the cell configuration for the LAA serving cell on an LTE cell that is a PCell. The LAA serving cell may be an SCell.

The eNB 160 determines 304 a synchronization signal structure. This may be accomplished as described above in connection with Figure 2. As described above, the synchronization signals include the PSS and the SSS.

In a first approach, the eNB 160 may determine 304 the synchronization signal structure based on the PSS and SSS structure of a FDD serving cell. An FDD PSS/SSS relative location may be used in a LAA serving cell.

In a second approach, the eNB 160 may determine 304 the synchronization signal structure based on the PSS and SSS structure and relative location of a duplexing method of a licensed primary cell. In this approach, the PSS/SSS relative location may be determined by the licensed PCell frame structure.

In a third approach, the eNB 160 may determine 304 the synchronization signal structure based on whether the LAA serving cell supports downlink (DL) and uplink (UL) transmissions. In this approach, if the LAA serving cell supports only DL transmissions, the synchronization signal structure of the LAA serving cell is determined by the PSS and SSS structure and relative location of a FDD serving cell. If the LAA serving cell supports both DL and UL transmissions, the synchronization signal structure of the LAA serving cell is determined by the PSS and SSS structure and relative location of a TDD serving cell.

In a fourth approach, the synchronization signal structure of the LAA serving cell is configured by the eNB 160. In this approach, the PSS/SSS relative location is configured by the eNB 160.

The eNB 160 transmits 306 the PSS and the SSS on a configured unlicensed carrier based on the synchronization signal structure. The eNB 160 transmits the PSS and the SSS of LAA serving cell on the configured unlicensed carrier.

Different approaches can be considered for synchronization signal transmission in a LAA cell. In a first approach, the LAA cell may broadcast the PSS and the SSS in a fixed subframe location in a radio frame. Therefore, the eNB 160 may transmit 306 the PSS and the SSS of the LAA serving cell in a fixed subframe location in a radio frame.

In a second approach for synchronization signal transmission in a LAA cell, the LAA cell may broadcast PSS and SSS in a fixed subframe location in a LAA set or burst of subframe transmissions. Therefore, the eNB 160 may transmit 306 the PSS and the SSS of the LAA serving cell in a fixed subframe location in a LAA set or a burst of subframe transmissions. The PSS and the SSS of the LAA serving cell may be in the first subframe in the LAA set or burst of subframe transmissions. Alternatively, the PSS and the SSS of the LAA serving cell may be in a fixed subframe index within the LAA set or burst of subframe transmissions.

Figure 4 illustrates one example of timing of synchronization signals for FDD. The synchronization signals may include a PSS 429 and an SSS 431. Figure 4 illustrates a 10 ms radio frame 441 that includes ten subframes 423. Each subframe 423 may be divided into time slots 425.

As described above, the PSS 429 may be broadcast twice during every radio frame 441 and both transmissions are identical. In the case of FDD, the PSS 429 may be broadcast using the central 62 subcarriers belonging to the last symbol 427 of time slots 0 and 10. In this example, one PSS 429a is broadcast in symbol 6 of time slot 0, and another PSS 429b is broadcast in symbol 6 of time slot 10.

The SSS 431 is broadcast twice within every radio frame 441. The two transmissions of the SSS 431 are different so the UE 102 can detect which is the first and which is the second transmission. In the case of FDD, the SSS 431 is broadcast using the central 62 subcarriers belonging to the second to last symbol 427 of time slots 0 and 10. In this example, one SSS 431a is broadcast in symbol 5 of time slot 0, and another SSS 431b is broadcast in symbol 5 of time slot 10.

This example assumes a normal cyclic prefix because there are 7 symbols 427 within each time slot 425. An extended cyclic prefix may follow a similar pattern, except there are only 6 symbols 427 within the time slot 425 (e.g., the SSS 431 and PSS 429 may remain within the last two symbols 427 of the time slot 425).

Figure 5 illustrates one example of timing of synchronization signals for TDD. The synchronization signals may include a PSS 529 and an SSS 531. Figure 5 illustrates a 10 ms radio frame 541 that includes ten subframes 523. Each subframe 523 may be divided into time slots 525.

In the case of TDD, the PSS 529 is broadcast using the central 62 subcarriers belonging to the third symbol 527 of time slot 2 (e.g., subframe 1) and the third symbol 527 of time slot 12 (e.g., subframe 6). Figure 5 shows the symbols 527a of subframe 0 and subframe 1 and the symbols 527b of subframe 5 and subframe 6. The PSS 529a may be sent in the third symbol 527 of time slot 2. The PSS 529b may be sent in the third symbol 527 of time slot 12.

Subframe 1 may be a special subframe 523 so the PSS 529a is sent as part of the downlink pilot time slot (DwPTS). Subframe 6 may or may not be a special subframe 523, depending upon the uplink-downlink subframe configuration. It is a special subframe 523 for configurations 0, 1, 2 and 6. Otherwise it is a normal downlink subframe 523.

The SSS 531 is broadcast using the central 62 subcarriers belonging to the last symbol 527 of time slot 1 (subframe 0) and the last symbol 527 of time slot 11 (subframe 5). Both time slots 1 and 11 may be within normal downlink subframes 523.

In the case of TDD, the SSS 531 and PSS 529 are not in adjacent symbols 527. The first two symbols 527 within time slots 2 and 12 are left available for the Physical Control Format Indicator Channel (PCFICH), the Physical Hybrid-ARQ Indicator Channel (PHICH) and Physical Downlink Control Channel (PDCCH).

This example assumes the normal cyclic prefix, uplink-downlink subframe configuration 0 and special subframe configuration 0. The extended cyclic prefix follows a similar pattern except there are only 6 symbols 527 within the time slot 525. For the extended cyclic prefix, the SSS 531 may remain within the last symbol 527 of time slots 1 and 11, while the PSS 529 remains within the third symbol 527 of time slots 2 and 12.

Figure 6 illustrates an example of a LAA subframe burst 633 transmission. This transmission may also be referred to as a LAA subframe set transmission. To provide fairness to other networks on the same unlicensed carrier, the eNB 160 may configure a maximum number of continuous subframe transmissions k in a LAA cell (e.g., a set of LAA subframes or a burst of LAA subframes). The maximum transmission time in an unlicensed carrier may be different in different regions and/or countries based on the regulatory requirements.

In this example, the subframe is configured with normal cyclic prefix. The first two OFDM symbol length is reserved for carrier sensing. Thus, subframe 0 in a set of LAA subframes is a subframe with a reduced number of symbols. No sensing is necessary for continuous LAA subframe transmission after the first LAA subframe. The regular LTE subframe structure may be applied on consecutive subframes in a LAA subframe set.

It should be noted that the subframe index number in Figure 6 refers to the index in a LAA subframe burst, instead of the subframe index in a radio frame as in legacy LTE cells.

Figure 7 illustrates an example of LAA coexistence with other unlicensed transmissions. A licensed serving cell 735 is shown with a 10 ms radio frame 741. A LAA serving cell 737 has LAA serving cell transmissions and other unlicensed transmissions (e.g., Wi-Fi or other LAA cells). Due to carrier sensing and deferred transmissions, the starting of a LAA transmission may be any subframe index in the radio frame 741 of the licensed frame structure.

Figure 8 illustrates a LAA synchronization signal structure that follows FDD. An LAA subframe 823 is shown with synchronization symbols (e.g., PSS 829 and SSS 831). In this example, the PSS/SSS in a LAA cell follows an FDD structure with normal prefix. The extended cyclic prefix follows a similar pattern except there are only 6 symbols 827 within the time slot 825. The SSS 831 and PSS 829 may remain within the last two symbols 827 of the time slot 825.

Figure 9 illustrates a LAA synchronization signal structure that follows TDD with shifted PSS and SSS locations within one subframe. An LAA subframe 923 is shown with synchronization symbols (e.g., PSS 929 and SSS 931). Figure 9 shows two examples of a PSS/SSS structure following a TDD cell (e.g., frame structure type 2) in a LAA cell with normal cyclic prefix. The extended cyclic prefix may follow a similar pattern except there are only 6 symbols 927 within the time slot 925.

In one example (illustrated by symbols 927a), the PSS 929a is broadcast using the central 62 subcarriers belonging to the third symbol 927 of time slot 1 of the LAA subframe 923 with synchronization signal. The SSS 931a is broadcast using the central 62 subcarriers belonging to the last symbol 927 of time slot 0 of the LAA subframe 923 with synchronization signal.

In another example (illustrated by symbols 927b), the PSS 929b is broadcast using the central 62 subcarriers belonging to the last symbol 927 of time slot 0 of the LAA subframe 923 with synchronization signal. The SSS 931b is broadcast using the central 62 subcarriers belonging to the fourth to last symbol 927 of time slot 0 of the LAA subframe 923 with synchronization signal.

Figure 10 illustrates an example of PSS/SSS transmissions in a LAA cell. Subframes 1023 are illustrated in a burst of LAA subframe 1023 transmissions. The LAA cell may broadcast PSS 1029 and SSS 1031 in a fixed subframe location in a LAA set or burst of subframe 1023 transmissions. The synchronization signals (e.g., PSS 1029 and SSS 1031) may be transmitted in the first subframe of each occurrence of a LAA set or burst of subframe 1023 transmissions.

There are several benefits to broadcast the PSS and SSS in the first subframe of a burst of LAA subframe transmissions. The beginning of a LAA transmission can be detected based on PSS/SSS detection. The synchronization of each burst of LAA subframes 1023 is synchronized with the latest set of synchronization signals, which may improve accuracy.

Similarly, if the LAA cell is configured with a maximum number of LAA subframes 1023 in a burst transmission that is greater than 1, the synchronization signals may be transmitted in a fixed subframe index within each occurrence of a LAA set or burst of subframe 1023 transmissions. For example, the synchronization signals may be transmitted in subframe index 1 of each LAA burst of subframe 1023 transmissions. If the maximum number of LAA subframes 1023 in a burst transmission is greater than 5, the synchronization signals may be transmitted in two fixed subframe indexes in the LAA burst transmissions. For example, if the maximum number of LAA subframes in a burst transmission is 10, the PSS 1029 and SSS 1031 can be allocated in subframe indexes 0 and 5 in the LAA subframe burst transmissions.

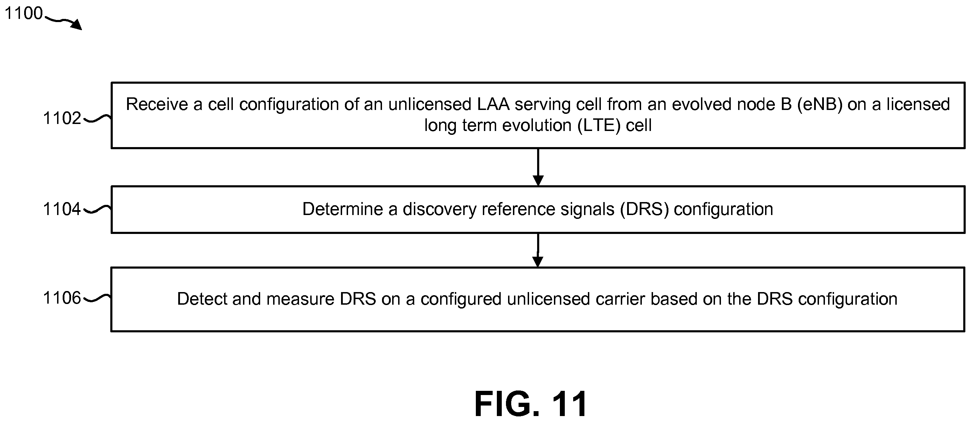

Figure 11 is a flow diagram illustrating one implementation of a method 1100 for receiving discovery reference signals (DRS) in a LAA serving cell. The method 1100 may be implemented by a UE 102. The UE 102 may communicate with one or more eNBs 160 in a wireless communication network. In one implementation, the wireless communication network may include an LTE network.

The UE 102 may receive 1102 a cell configuration of an unlicensed LAA serving cell from an eNB 160 on a licensed LTE cell. This may be accomplished as described above in connection with Figure 2. The eNB 160 may transmit the cell configuration for the LAA serving cell on an LTE cell that is a PCell. The LAA serving cell may be an SCell.

The UE 102 may determine 1104 a DRS configuration. In one implementation, discovery signals may be used for small cells. DRS may be defined for small cell enhancements. Besides PSS and SSS, the discovery signals of a serving cell may include other signals such as a cell specific reference signal (CRS) and a channel state information-reference signal (CSI-RS). The discovery signals may be configured by a higher layer. CRS should be transmitted in a configured discovery subframe. The CSI-RS may be configured by upper layer signaling with a resource position and periodicity. Additionally, CSI-RS is assumed in the DRS for measurement if configured by higher layers. The UE 102 may use the DRS to obtain a transmit point identification (TPID).

A DRS measurement timing configuration (DMTC) may be configured for each frequency carrier. The DMTC may have a periodicity and offset. The DMTC periodicity may be configurable at least to 40 ms, 80 ms, or 160 ms. The duration of DMTC may be fixed to 6 ms.

The maximum duration of a DRS occasion may be 5 subframes and may be signaled per frequency to UEs 102. The duration of the DRS occasion may be in the range of 1 and 5 subframes for FDD and in the range of 2 and 5 subframes for TDD, and is the same for all cells on one frequency. The SSS may occur in the first subframe of a DRS occasion. But the DRS occasion offset and duration may not be signaled. Once configured, a UE 102 may detect the periodic DRS from a small cell for cell synchronization and identification.

In another implementation, discovery signals may be used for a LAA serving cell. A LAA cell may be most suitable to be configured as a secondary small cell. Thus, the DRS may also be applied to a LAA cell with a DMTC configuration. Besides PSS and SSS discussed above, the discovery signals of a LAA serving cell may include other signals such as CSI-RS and CRS.

However, in a LAA serving cell, the eNB 160 may not guarantee that the configured DRS subframe can be transmitted due to listen-before-talk requirements. Thus, a similar issue exists for other discovery signals as for PSS/SSS transmissions in a LAA network. Similar methods can be applied to other discovery signals as for PSS/SSS.

The UE 102 may detect and measure 1106 discovery reference signals on a configured unlicensed carrier based on the DRS configuration. Several approaches can be considered for DRS transmissions in a LAA cell. It should be noted that the PSS and SSS may be included as a part of the DRS.

In a first approach, the LAA cell may transmit DRS according to the configuration as in a licensed cell. In this approach, the UE 102 may detect and measure 1106 the discovery reference signals of the LAA serving cell periodically in a fixed subframe location. If the subframe is not occupied by LAA transmission following CCA and LBT procedures, the DRS may be broadcast as in regular LTE subframes. However, if the subframe is occupied by other unlicensed transmissions, the LAA cell may follow the CCA and LBT procedures and, thus, should not transmit a LAA subframe. Therefore, in one implementation, the DRS may be dropped if the LAA cell senses that the channel is busy. In another implementation, to keep the DRS broadcasting, only configured DRS may be transmitted, and no signals should be transmitted in other areas of the LAA subframe.

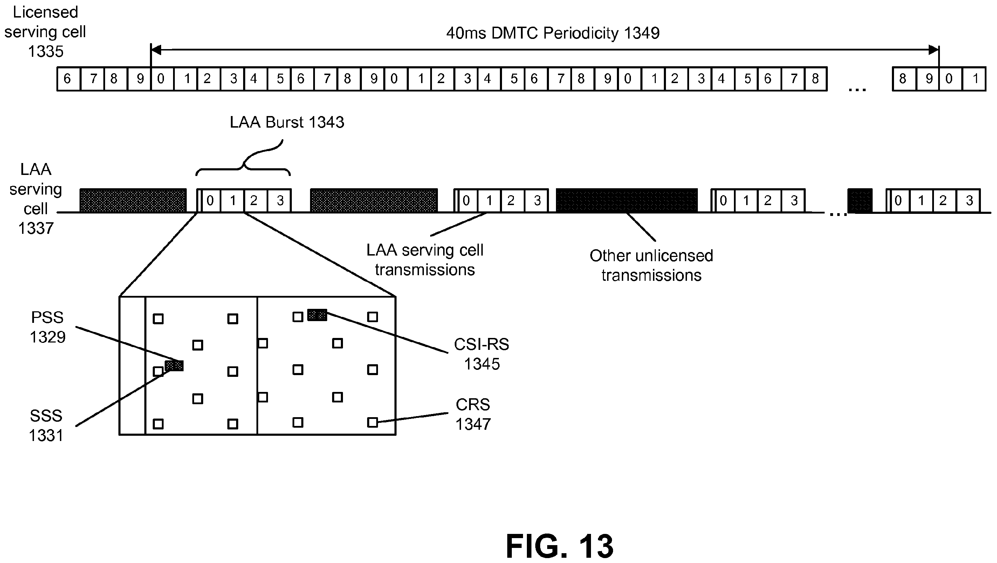

In a second approach for DRS transmissions in a LAA cell, the UE 102 may detect and measure 1106 the discovery reference signals of the LAA serving cell in a fixed subframe location in a LAA set or burst of subframe transmissions. The LAA cell may broadcast DRS in a fixed subframe location in a LAA set or burst of subframe transmissions. In one implementation, the DRS of the LAA serving cell may be transmitted in the first several subframes of each LAA set or burst of subframe transmissions. In another implementation, with reduced DRS density, the DRS of the LAA serving cell may always be transmitted in the first LAA set or burst of subframe transmissions within a DMTC period. The DRS occasion may be in the range of 1 to 5 subframes. An example of DRS transmissions in a LAA cell is described in connection with Figure 13.

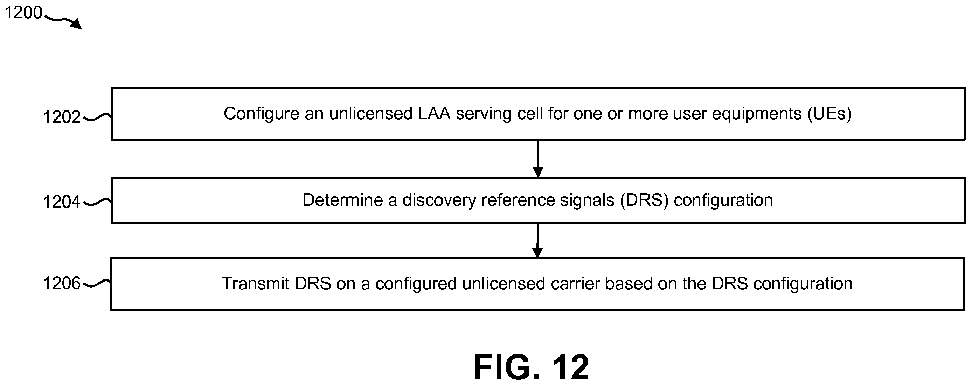

Figure 12 is a flow diagram illustrating on implementation of a method 1200 for transmitting DRS in a LAA serving cell. The method 1200 may be implemented by an eNB 160. The eNB 160 may communicate with one or more UEs 102 in a wireless communication network. In one implementation, the wireless communication network may include an LTE network.

The eNB 160 may configure 1202 an unlicensed LAA serving cell for one or more UEs 102. As described above, a LAA serving cell allows opportunistic usage of unlicensed carrier for LTE transmissions. The eNB 160 may transmit the cell configuration for the LAA serving cell on an LTE cell that is a PCell. The LAA serving cell may be an SCell.

The eNB 160 may determine 1204 a DRS configuration. In one implementation, discovery signals may be used for small cells. Discovery signals may be used for a LAA serving cell. The DRS may be applied to a LAA cell with a DMTC configuration. Besides PSS and SSS discussed above, the discovery signals of a LAA serving cell may include other signals such as CSI-RS and CRS. The discovery signals may be configured by a higher layer. CRS should be transmitted in a configured discovery subframe. The CSI-RS may be configured by upper layer signaling with a resource position and periodicity. Additionally, CSI-RS is assumed in the DRS for measurement if configured by higher layers.

The eNB 160 may transmit 1206 discovery reference signals on a configured unlicensed carrier based on the DRS configuration. In a first approach, the LAA cell may transmit DRS according to the configuration as in a licensed cell. In this approach, the eNB 160 may transmit 1206 the discovery reference signals of the LAA serving cell periodically in a fixed subframe location. If the subframe is not occupied by LAA transmission following CCA and LBT procedures, the DRS may be broadcast as in regular LTE subframes. However, if the subframe is occupied by other unlicensed transmissions, the LAA cell may follow the CCA and LBT procedures and, thus, should not transmit a LAA subframe. Therefore, in one implementation, the eNB 160 may drop the DRS if the LAA cell senses that the channel is busy. In another implementation, to keep the DRS broadcasting, the eNB 160 may transmit only configured DRS, and no signals are transmitted in other areas of the LAA subframe.

In a second approach for DRS transmissions in a LAA cell, the eNB 160 may transmit 1206 the discovery reference signals of the LAA serving cell in a fixed subframe location in a LAA set or burst of subframe transmissions. The LAA cell may broadcast DRS in a fixed subframe location in a LAA set or burst of subframe transmissions. In one implementation, the eNB 160 may transmit 1206 the DRS of the LAA serving cell in the first several subframes of each LAA set or burst of subframe transmissions. In another implementation, with reduced DRS density, the eNB 160 may always transmit 1206 the DRS of the LAA serving cell in the first LAA set or burst of subframe transmissions within a DMTC period. The DRS occasion may be in the range of 1 to 5 subframes. An example of DRS transmissions in a LAA cell is described in connection with Figure 13.

Figure 13 illustrates an example of DRS transmission in a LAA serving cell 1337. In this example, DRS are present in the first two subframes in the first occasion of LAA burst 1343 transmissions within a DMTC period 1349 of a licensed serving cell 1335. The DMTC period 1349 in this example is 40 ms. The PSS 1329 and SSS 1331 are located in the first subframe of the first LAA burst 1343 transmission. The CSI-RS 1345 is configured in the second subframe of the first LAA burst 1343 transmission. The CRS 1347 may be present in both subframes as a part of DRS.

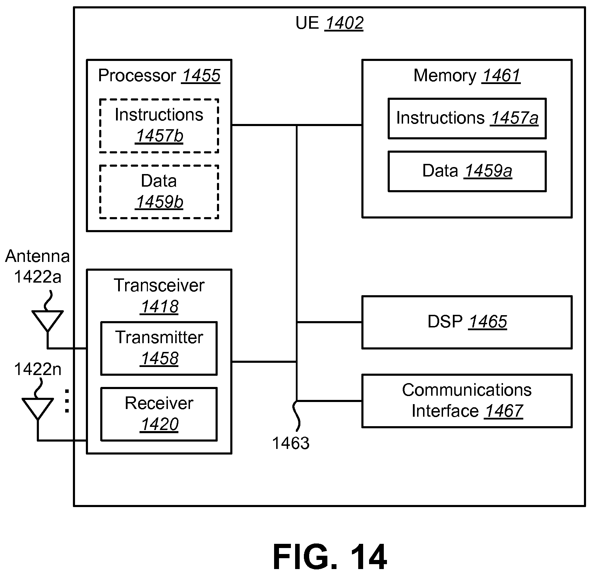

Figure 14 illustrates various components that may be utilized in a UE 1402. The UE 1402 described in connection with Figure 14 may be implemented in accordance with the UE 102 described in connection with Figure 1. The UE 1402 includes a processor 1455 that controls operation of the UE 1402. The processor 1455 may also be referred to as a central processing unit (CPU). Memory 1461, which may include read-only memory (ROM), random access memory (RAM), a combination of the two or any type of device that may store information, provides instructions 1457a and data 1459a to the processor 1455. A portion of the memory 1461 may also include non-volatile random access memory (NVRAM). Instructions 1457b and data 1459b may also reside in the processor 1455. Instructions 1457b and/or data 1459b loaded into the processor 1455 may also include instructions 1457a and/or data 1459a from memory 1461 that were loaded for execution or processing by the processor 1455. The instructions 1457b may be executed by the processor 1455 to implement one or more of the method 200 and 1100 described above.

The UE 1402 may also include a housing that contains one or more transmitters 1458 and one or more receivers 1420 to allow transmission and reception of data. The transmitter(s) 1458 and receiver(s) 1420 may be combined into one or more transceivers 1418. One or more antennas 1422a-n are attached to the housing and electrically coupled to the transceiver 1418.

The various components of the UE 1402 are coupled together by a bus system 1463, which may include a power bus, a control signal bus and a status signal bus, in addition to a data bus. However, for the sake of clarity, the various buses are illustrated in Figure 14 as the bus system 1463. The UE 1402 may also include a digital signal processor (DSP) 1465 for use in processing signals. The UE 1402 may also include a communications interface 1467 that provides user access to the functions of the UE 1402. The UE 1402 illustrated in Figure 14 is a functional block diagram rather than a listing of specific components.

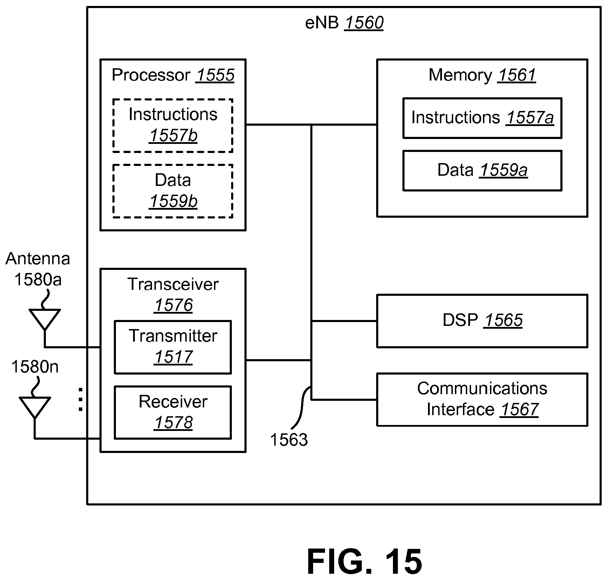

Figure 15 illustrates various components that may be utilized in an eNB 1560. The eNB 1560 described in connection with Figure 15 may be implemented in accordance with the eNB 160 described in connection with Figure 1. The eNB 1560 includes a processor 1555 that controls operation of the eNB 1560. The processor 1555 may also be referred to as a central processing unit (CPU). Memory 1561, which may include read-only memory (ROM), random access memory (RAM), a combination of the two or any type of device that may store information, provides instructions 1557a and data 1559a to the processor 1555. A portion of the memory 1561 may also include non-volatile random access memory (NVRAM). Instructions 1557b and data 1559b may also reside in the processor 1555. Instructions 1557b and/or data 1559b loaded into the processor 1555 may also include instructions 1557a and/or data 1559a from memory 1561 that were loaded for execution or processing by the processor 1555. The instructions 1557b may be executed by the processor 1555 to implement one or more of the method 300 and 1200 described above.

The eNB 1560 may also include a housing that contains one or more transmitters 1517 and one or more receivers 1578 to allow transmission and reception of data. The transmitter(s) 1517 and receiver(s) 1578 may be combined into one or more transceivers 1576. One or more antennas 1580a-n are attached to the housing and electrically coupled to the transceiver 1576.

The various components of the eNB 1560 are coupled together by a bus system 1563, which may include a power bus, a control signal bus and a status signal bus, in addition to a data bus. However, for the sake of clarity, the various buses are illustrated in Figure 15 as the bus system 1563. The eNB 1560 may also include a digital signal processor (DSP) 1565 for use in processing signals. The eNB 1560 may also include a communications interface 1567 that provides user access to the functions of the eNB 1560. The eNB 1560 illustrated in Figure 15 is a functional block diagram rather than a listing of specific components.

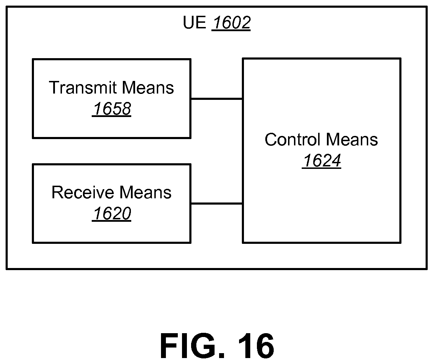

Figure 16 is a block diagram illustrating one implementation of a UE 1602 in which systems and methods for performing carrier aggregation may be implemented. The UE 1602 includes transmit means 1658, receive means 1620 and control means 1624. The transmit means 1658, receive means 1620 and control means 1624 may be configured to perform one or more of the functions described in connection with Figures 2 and 11 above. Figure 14 above illustrates one example of a concrete apparatus structure of Figure 16. Other various structures may be implemented to realize one or more of the functions of Figures 2 and 11. For example, a DSP may be realized by software.

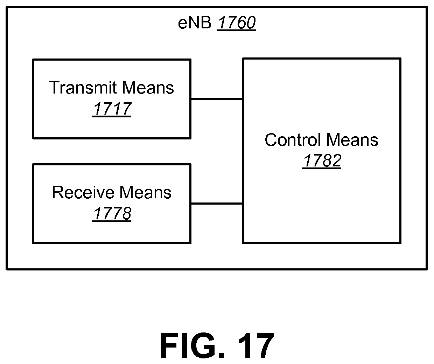

Figure 17 is a block diagram illustrating one implementation of an eNB 1760 in which systems and methods for performing carrier aggregation may be implemented. The eNB 1760 includes transmit means 1717, receive means 1778 and control means 1782. The transmit means 1717, receive means 1778 and control means 1782 may be configured to perform one or more of the functions described in connection with Figures 3 and 12 above. Figure 15 above illustrates one example of a concrete apparatus structure of Figure 17. Other various structures may be implemented to realize one or more of the functions of Figures 3 and 12. For example, a DSP may be realized by software.

The term "computer-readable medium" refers to any available medium that can be accessed by a computer or a processor. The term "computer-readable medium," as used herein, may denote a computer- and/or processor-readable medium that is non-transitory and tangible. By way of example, and not limitation, a computer-readable or processor-readable medium may comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer or processor. Disk and disc, as used herein, includes compact disc (CD), laser disc, optical disc, digital versatile disc (DVD), floppy disk and Blu-ray^{®} disc where disks usually reproduce data magnetically, while discs reproduce data optically with lasers.

It should be noted that one or more of the methods described herein may be implemented in and/or performed using hardware. For example, one or more of the methods described herein may be implemented in and/or realized using a chipset, an application-specific integrated circuit (ASIC), a large-scale integrated circuit (LSI) or integrated circuit, etc.

Each of the methods disclosed herein comprises one or more steps or actions for achieving the described method. The method steps and/or actions may be interchanged with one another and/or combined into a single step without departing from the scope of the claims. In other words, unless a specific order of steps or actions is required for proper operation of the method that is being described, the order and/or use of specific steps and/or actions may be modified without departing from the scope of the claims.

## Claims

1. A user equipment, UE (102, 1402), comprising:
a processor (1455); and
a memory (1461) in electronic communication with the processor (1455), wherein instructions (1457a, 1457b) stored in the memory are executable to:
receive a radio resource control, RRC, configuration including a configuration of a licensed-assisted access, LAA, for an LAA secondary serving cell, SCell, from an evolved node B, eNB (160, 1560);
determine a synchronization signal structure of the LAA SCell based on a primary synchronization signal, PSS, and a secondary synchronization signal, SSS, structure and relative PSS/SSS location of a frequency-division duplexing, FDD, serving cell; and
receive a PSS and a SSS of the LAA SCell, based on the synchronization signal structure and the configuration of an LAA for an LAA SCell, wherein the PSS and the SSS are mapped according to a frame structure of FDD, wherein
the LAA is applicable to downlink only transmissions, and
the LAA is performed in unlicensed band; and
perform subframe synchronization, slot synchronization and frequency synchronization for the LAA SCell based on the received PSS and SSS.

2. The UE (102, 1402) of claim 1, wherein the UE (102, 1402) receives the PSS and the SSS of the LAA SCell in a fixed subframe location in a radio frame.

3. The UE (102, 1402) of claim 1, wherein the UE receives the PSS and the SSS of the_LAA SCell in a fixed subframe location in a burst of subframe transmissions.

4. The UE (102, 1402) of claim 3, wherein the PSS and the SSS of the LAA SCell are in a first subframe in the burst of subframe transmissions.

5. An evolved node B, eNB (160, 1560), comprising:
a processor (1555); and
a memory (1561) in electronic communication with the processor (1555), wherein instructions stored in the memory (1561) are executable to:
transmit a radio resource control, RRC, configuration including a configuration of a licensed-assisted access, LAA, for an LAA secondary serving cell, SCell, for one or more user equipments, UEs (102, 1402),
determine a synchronization signal structure of the LAA SCell based on a primary synchronization signal, PSS, and a secondary synchronization signal, SSS, structure and relative PSS/SSS location of a frequency-division duplexing, FDD, serving cell; and
transmit a PSS and a SSS of the LAA SCell, based on the synchronization signal structure and the configuration of an LAA for an LAA SCell, wherein the PSS and the SSS are mapped according to a frame structure of FDD, wherein
the LAA is applicable to downlink only transmission, and
the LAA is performed in unlicensed band.

6. The eNB (160, 1560), of claim 5, wherein the eNB (160, 1560) transmits the PSS and the SSS of the LAA SCell in a fixed subframe location in a radio frame.

7. The eNB (160, 1560) of claim 5, wherein the eNB (160, 1560) transmits the PSS and the SSS of the LAA SCell in a fixed subframe location in a burst of subframe transmissions.

8. The eNB (160, 1560) of claim 7, wherein the PSS and the SSS of the LAA SCell are in a first subframe in the burst of subframe transmissions.

9. A method by a user equipment, UE (102, 1402), the method comprising:
receiving a radio resource control, RRC, configuration including a configuration of a licensed-assisted access, LAA, for an LAA secondary serving cell, SCell, from an evolved node B, eNB (160, 1560);
determining a synchronization signal structure of the LAA SCell based on a primary synchronization signal, PSS, and a secondary synchronization signal, SSS, structure and relative PSS/SSS location of a frequency-division duplexing, FDD, serving cell; and
receiving a PSS and a SSS of the LAA SCell, based on the synchronization signal structure and the configuration of an LAA for an LAA SCell, wherein the PSS and the SSS are mapped according to a frame structure of FDD, wherein
the LAA is applicable to downlink only transmissions, and
the LAA is performed in unlicensed band; and
performing subframe synchronization, slot synchronization and frequency synchronization for the LAA SCell based on the received PSS and SSS.

10. A method by an evolved node B, eNB (160, 1560), the method comprising:
transmitting a radio resource control, RRC, configuration including a configuration of a licensed-assisted access, LAA, for an LAA secondary serving cell, SCell for one or more user equipments, UEs (102, 1402),
determining a synchronization signal structure of the LAA SCell based on a primary synchronization signal, PSS, and a secondary synchronization signal, SSS, structure and relative PSS/SSS location of a frequency-division duplexing, FDD, serving cell; and
transmitting a PSS and a SSS of the LAA SCell, based on the synchronization signal structure and the configuration of an LAA for an LAA SCell, wherein the PSS and the SSS are mapped according to a frame structure of FDD, wherein
the LAA is applicable to downlink only transmission, and
the LAA is performed in unlicensed band.

11. The UE (102, 1402) of claim 1, wherein the RRC configuration is received via a PCell.

12. The eNB (160, 1560) of claim 5, wherein the RRC configuration is transmitted via a PCell.

## Patentansprüche

1. Nutzerendgerät, UE (102, 1402), aufweisend:
einen Prozessor (1455); und
einen Speicher (1461) in elektronischer Verbindung mit dem Prozessor (1455), wobei im Speicher gespeicherte Anweisungen (1457a, 1457b) ausführbar sind, um:
eine Konfiguration einer Funkressourcensteuerung, RRC, die eine Konfiguration eines lizenzunterstützten Zugangs, LAA, für eine LAA-Sekundärdienstzelle, SCell, enthält, von einer Evolved-Node B, eNB (160, 1560) zu empfangen;
eine Synchronisationssignalstruktur der LAA-SCell basierend auf einer Primärsynchronisationssignal-, PSS-, und einer Sekundärsynchronisationssignal-, SSS-, Struktur und einer relativen PSS/SSS-Stelle einer Frequenzduplex-, FDD-, Dienstzelle zu bestimmen; und
ein PSS und ein SSS der LAA-SCell basierend auf der Synchronisationssignalstruktur und der Konfiguration eines LAA für eine LAA-SCell zu empfangen, wobei das PSS und das SSS gemäß einer Frame-Struktur des FDD abgebildet werden, wobei
der LAA auf Übertragungen nur im Downlink anwendbar ist und
der LAA in einem nicht lizensierten Band durchgeführt wird; und
eine Subframe-Synchronisation, eine Slot-Synchronisation und eine Frequenz-Synchronisation für die LAA-SCell basierend auf den empfangenen PSS und SSS durchzuführen.

2. UE (102, 1402) nach Anspruch 1, wobei das UE (102, 1402) das PSS und das SSS der LAA-SCell an einer festen Subframe-Stelle in einem Funk-Frame empfängt.

3. UE (102, 1402) nach Anspruch 1, wobei das UE das PSS und das SSS der LAA-SCell an einer festen Subframe-Stelle in einem Burst von Subframe-Übertragungen empfängt.

4. UE (102, 1402) nach Anspruch 3, wobei das PSS und das SSS der LAA-SCell in einem ersten Subframe im Burst von Subframe-Übertragungen liegen.

5. Evolved-Node B, eNB (160, 1560), aufweisend:
einen Prozessor (1555); und
einen Speicher (1561) in elektronischer Verbindung mit dem Prozessor (1555), wobei im Speicher (1561) gespeicherte Anweisungen ausführbar sind, um:
eine Konfiguration einer Funkressourcensteuerung, RRC, die eine Konfiguration eines lizenzunterstützten Zugangs, LAA, für eine LAA-Sekundärdienstzelle, SCell, enthält, für ein oder mehrere Nutzerendgeräte, UEs (102, 1402), zu übertragen;
eine Synchronisationssignalstruktur der LAA-SCell basierend auf einer Primärsynchronisationssignal-, PSS-, und einer Sekundärsynchronisationssignal-, SSS-, Struktur und einer relativen PSS/SSS-Stelle einer Frequenzduplex-, FDD-, Dienstzelle zu bestimmen; und
ein PSS und ein SSS der LAA-SCell basierend auf der Synchronisationssignalstruktur und der Konfiguration eines LAA für eine LAA-SCell zu übertragen, wobei das PSS und das SSS gemäß einer Frame-Struktur des FDD abgebildet werden, wobei
der LAA auf Übertragungen nur im Downlink anwendbar ist und
der LAA in einem nicht lizensierten Band durchgeführt wird.

6. eNB (160, 1560) nach Anspruch 5, wobei die eNB (160, 1560) das PSS und das SSS der LAA-SCell an einer festen Subframe-Stelle in einem Funk-Frame überträgt.

7. eNB (160, 1560) nach Anspruch 5, wobei die eNB (160, 1560) das PSS und das SSS der LAA-SCell an einer festen Subframe-Stelle in einem Burst von Subframe-Übertragungen überträgt.

8. eNB (160, 1560) nach Anspruch 7, wobei das PSS und das SSS der LAA-SCell in einem ersten Subframe im Burst von Subframe-Übertragungen liegen.

9. Verfahren mittels eines Nutzerendgeräts, UE (102, 1402), wobei das Verfahren aufweist:
Empfangen einer Konfiguration einer Funkressourcensteuerung, RRC, die eine Konfiguration eines lizenzunterstützten Zugangs, LAA, für eine LAA-Sekundärdienstzelle, SCell, enthält, von einer Evolved-Node B, eNB (160, 1560);
Bestimmen einer Synchronisationssignalstruktur der LAA-SCell basierend auf einer Primärsynchronisationssignal-, PSS-, und einer Sekundärsynchronisationssignal-, SSS-, Struktur und einer relativen PSS/SSS-Stelle einer Frequenzduplex-, FDD-, Dienstzelle; und
Empfangen eines PSS und eines SSS der LAA-SCell basierend auf der Synchronisationssignalstruktur und der Konfiguration eines LAA für eine LAA-SCell, wobei das PSS und das SSS gemäß einer Frame-Struktur des FDD abgebildet werden, wobei
der LAA auf Übertragungen nur im Downlink anwendbar ist und
der LAA in einem nicht lizensierten Band durchgeführt wird; und
Durchführen einer Subframe-Synchronisation, einer Slot-Synchronisation und einer Frequenz-Synchronisation für die LAA-SCell basierend auf den empfangenen PSS und SSS.

10. Verfahren mittels einer Evolved-Node B, eNB (160, 1560), wobei das Verfahren aufweist:
Übertragen einer Konfiguration einer Funkressourcensteuerung, RRC, die eine Konfiguration eines lizenzunterstützten Zugangs, LAA, für eine LAA-Sekundärdienstzelle, SCell, enthält, für ein oder mehrere Nutzerendgeräte, UEs (102, 1402);
Bestimmen einer Synchronisationssignalstruktur der LAA-SCell basierend auf einer Primärsynchronisationssignal-, PSS-, und einer Sekundärsynchronisationssignal-, SSS-, Struktur und einer relativen PSS/SSS-Stelle einer Frequenzduplex-, FDD-, Dienstzelle; und
Übertragen eines PSS und eines SSS der LAA-SCell basierend auf der Synchronisationssignalstruktur und der Konfiguration eines LAA für eine LAA-SCell, wobei das PSS und das SSS gemäß einer Frame-Struktur des FDD abgebildet werden, wobei
der LAA auf Übertragungen nur im Downlink anwendbar ist und
der LAA in einem nicht lizensierten Band durchgeführt wird.

11. UE (102, 1402) nach Anspruch 1, wobei die RRC-Konfiguration über eine PCell empfangen wird.

12. eNB (160, 1560) nach Anspruch 5, wobei die RRC-Konfiguration über eine PCell übertragen wird.

## Revendications

1. Équipement utilisateur, UE (102, 1402) comprenant :
un processeur (1455) ; et
une mémoire (1461) en communication électronique avec le processeur (1455), dans lequel des instructions (1457a, 1457b) stockées dans la mémoire sont exécutables pour :
recevoir une configuration de gestion des ressources radio, RRC, incluant une configuration d'un accès assisté par licence, LAA, pour une cellule de desserte secondaire, SCell, LAA à partir d'un nœud B évolué, eNB (160, 1560) ;
déterminer une structure de signal de synchronisation de la SCell LAA sur la base de la structure d'un signal de synchronisation primaire, PSS, et d'un signal de synchronisation secondaire, SSS, et de l'emplacement PSS/SSS relatif d'une cellule de desserte de duplexage par répartition en fréquence, FDD ; et
recevoir un PSS et un SSS de la SCell LAA, sur la base de la structure de signal de synchronisation et de la configuration d'un LAA pour une SCell LAA, dans lequel le PSS et le SSS sont mappés selon une structure de trame de FDD, dans lequel
le LAA est applicable aux transmissions en liaison descendante uniquement, et
le LAA est réalisé en bande sans licence ; et
réaliser la synchronisation de sous-trame, la synchronisation de créneau et la synchronisation de fréquence pour la SCell LAA sur la base des PSS et SSS reçus.

2. UE (102, 1402) selon la revendication 1, dans lequel l'UE (102, 1402) reçoit le PSS et le SSS de la SCell LAA dans un emplacement de sous-trame fixe dans une trame radio.

3. UE (102, 1402) selon la revendication 1, dans lequel l'UE reçoit le PSS et le SSS de la SCell LAA dans un emplacement de sous-trame fixe dans une rafale de transmissions de sous-trame.

4. UE (102, 1402) selon la revendication 3, dans lequel le PSS et le SSS de la SCell LAA se trouvent dans une première sous-trame dans la rafale de transmissions de sous-trame.

5. Nœud B évolué, eNB (160, 1560), comprenant :
un processeur (1555) ; et
une mémoire (1561) en communication électronique avec le processeur (1555), dans lequel des instructions stockées dans la mémoire (1561) sont exécutables pour :
transmettre une configuration de gestion des ressources radio, RRC, incluant une configuration d'un accès assisté par licence, LAA, pour une cellule de desserte secondaire, SCell, LAA pour un ou plusieurs équipements utilisateurs, UE (102, 1402),
déterminer une structure de signal de synchronisation de la SCell LAA sur la base de la structure d'un signal de synchronisation primaire, PSS, et d'un signal de synchronisation secondaire, SSS, et de l'emplacement PSS/SSS relatif d'une cellule de desserte de duplexage par répartition en fréquence, FDD ; et
transmettre un PSS et un SSS de la SCell LAA, sur la base de la structure de signal de synchronisation et de la configuration d'un LAA pour une SCell LAA, dans lequel le PSS et le SSS sont mappés selon une structure de trame de FDD, dans lequel
le LAA est applicable à une transmission en liaison descendante uniquement, et le LAA est réalisé en bande sans licence.

6. eNB (160, 1560) selon la revendication 5, dans lequel l'eNB (160, 1560) transmet le PSS et le SSS de la SCell LAA dans un emplacement de sous-trame fixe dans une trame radio.

7. eNB (160, 1560) selon la revendication 5, dans lequel l'eNB (160, 1560) transmet le PSS et le SSS de la SCell LAA dans un emplacement de sous-trame fixe dans une rafale de transmissions de sous-trame.

8. eNB (160, 1560) selon la revendication 7, dans lequel le PSS et le SSS de la SCell LAA se trouvent dans une première sous-trame dans la rafale de transmissions de sous-trames.

9. Procédé par un équipement utilisateur, UE (102, 1402), le procédé comprenant :
la réception d'une configuration de gestion des ressources radio, RRC, incluant une configuration d'un accès assisté par licence, LAA, pour une cellule de desserte secondaire, SCell, LAA à partir d'un nœud B évolué, eNB (160, 1560) ;
la détermination d'une structure de signal de synchronisation de la SCell LAA sur la base d'une structure d'un signal de synchronisation primaire, PSS, et d'un signal de synchronisation secondaire, SSS, et de l'emplacement PSS/SSS relatif d'une cellule de desserte de duplexage par répartition en fréquence, FDD ; et
la réception d'un PSS et d'un SSS de la SCell LAA, sur la base de la structure de signal de synchronisation et de la configuration d'un LAA pour une SCell LAA, dans lequel le PSS et le SSS sont mappés selon une structure de trame de FDD, dans lequel
le LAA est applicable aux transmissions en liaison descendante uniquement, et
le LAA est réalisé en bande sans licence ; et
la réalisation d'une synchronisation de sous-trame, d'une synchronisation de créneau et d'une synchronisation de fréquence pour la SCell LAA sur la base des PSS et SSS reçus.

10. Procédé par un nœud B évolué, eNB (160, 1560), le procédé comprenant :
la transmission d'une configuration de gestion des ressources radio, RRC, incluant une configuration d'un accès assisté par licence, LAA, pour une cellule de desserte secondaire, SCell, LAA pour un ou plusieurs équipements utilisateurs, UE (102, 1402),
la détermination d'une structure de signal de synchronisation de la SCell LAA sur la base d'une structure d'un signal de synchronisation primaire, PSS, et d'un signal de synchronisation secondaire, SSS, et de l'emplacement PSS/SSS relatif d'une cellule de desserte de duplexage par répartition en fréquence, FDD ; et
la transmission d'un PSS et d'un SSS de la SCell LAA, sur la base de la structure de signal de synchronisation et de la configuration d'un LAA pour une SCell LAA, dans lequel le PSS et le SSS sont mappés selon une structure de trame de FDD, dans lequel
le LAA est applicable à une transmission en liaison descendante uniquement, et le LAA est réalisé en bande sans licence.

11. UE (102, 1402) selon la revendication 1, dans lequel la configuration RRC est reçue via une PCell.

12. eNB (160, 1560) selon la revendication 5, dans lequel la configuration RRC est transmise via une PCell.
